# EUROPEAN PATENT APPLICATION

(11) **EP 2 518 683 A1**
(43) Date of publication of application: **31.10.2012**
(21) Application number: 10839366.1
(22) Date of filing: 20.12.2010
(51) Int. Cl.: G06Q 50/00, G06Q 30/00

(54) **ACTION PRESENTATION DEVICE, ACTION PRESENTATION SYSTEM, COMPUTER READABLE RECORDING MEDIUM HAVING ACTION PRESENTATION PROGRAM RECORDED THEREON, AND ACTION PRESENTATION METHOD**

(30) Priority: 21.12.2009 JP 2009289792
(71) Applicant: NEC Corporation, Tokyo 108-8001 (JP)
(72) Inventor: ITAYA Satoko, Tokyo 108-8001 (JP); TANAKA Rie, Tokyo 108-8001 (JP); KONISHI Taku, Tokyo 108-8001 (JP); DOI Shinichi, Tokyo 108-8001 (JP)
(74) Representative: Vossius & Partner
(86) International application number: PCT/JP2010/072936
(87) International publication number: WO 2011/078136

(57) **Abstract**

An action presentation system (101) comprises an information DB (2) associating and storing request information presenting a request, state information presenting the state of a means for fulfilling at least part of the request, and action information presenting model actions for fulfilling at least part of the request. The action presentation system (101) additionally comprises a candidate creation part (12) creating multiple candidate actions a user (A) can execute in the state presented by the state information associated with the request information presenting the request of the user (A) based on model actions presented by the action information associated with the request information, and a cost calculation part (13) calculating the total cost of each of the candidate actions including mental cost presenting the magnitude of mental strain the first user will experience from execution of the created candidate action. The action presentation system (101) further comprises a display part (62) presenting to the user (A) a candidate action selected from multiple created candidate actions based on the total cost as the recommended candidate action for the user (A) to execute.

## Description

### Technical Field

The present invention relates to an action presentation device, action presentation system, action presentation method, and computer-readable recording medium having an action presentation program recorded thereon for presenting actions the user can execute for receiving goods or services.

### Background Art

Sharing systems for managing vehicles used (namely, shared) by people belonging to a specific group (namely, community) have been known. In order to increase the utilization of a sharing system by a community, it is necessary to lower the cost the user will bear for using a vehicle. The cost the user will bear for using a vehicle includes the time to receive a vehicle, vehicle usage fee, and time to return the vehicle.

Non-Patent Literature 1 discloses a multi-station model modeling a sharing system having multiple stations where vehicles are received/returned. This multi-station model models a case in which a user receives a vehicle at the nearest station before leaving for his/her destination and returns the vehicle at the nearest station after arriving at the destination.

Patent Literature 1 discloses a system in which when the key to a vehicle shared by multiple users is given to another user along with the vehicle without returning them to the key administration office, handover information transmitted from the portable terminals carried by the users is registered at the server so as to supervise the users of a shared vehicle.

Patent Literature 2 discloses a rental administration system comprising a reservation information storage means storing rental reservation for rental items, and a retention request notifying means notifying the borrower of a rental item of request for retaining the rental item after the rental period expires when no rental reservation for the rental item is stored in the reservation information storage means. This system further comprises a means calling for collection of a rental item from the borrower and delivery of the collected rental item to the user who made reservation for the rental item when a rental reservation for the rental item is stored in the reservation information storage means.

Patent Literature 3 discloses a vehicle delivery decision device acquiring a list of vehicles deliverable upon vehicle delivery request, and calculating the shortest route from the current location of each vehicle on the acquired list to the location where the vehicle delivery request is made. The vehicle delivery decision device calculates the traveling cost for each vehicle on the list when it travels along the calculated shortest route and delivers a vehicle to the location where the vehicle delivery request is made so as to minimize the travelling cost.

Furthermore, Patent Literature 4 discloses a system presenting the cost required to purchase a product the user desires ("the desired product," hereafter) from a seller. This system presents, on the basis of seller handling the desired product, the user's address entered from the user terminal, the seller's address stored in the database in advance, the price of the product sold by the seller, the delivery date of the product by the seller, the distance between the user's address and the seller's address and the delivery date of the desired product based on the seller's freightage of the product, and the total cost calculated by adding the freightage for transfer to the seller's address to the price. This system sorts and presents to the user data consisting of the total costs and delivery dates of sellers by a sort key specified by the user among the delivery distance, delivery date, and total cost.

Furthermore, Patent Literature 5 discloses a method of creating a transport/delivery plan minimizing the cost in a delivery area including multiple bases such as factories and warehouses and multiple delivery destinations to which products produced at the bases are delivered. This method calculates, for each order specifying the quantity of a product to be delivered and a deliver destination, the total of production cost of the product at a base, product transport cost to the base, base cost such as base expense and maintenance/operation cost, and product delivery cost from the base to the delivery destination, and selects the base having the lowest calculated total cost as the delivery source for the ordered product, thereby minimizing the cost in the entire delivery area.

### Prior Art Literature

### Patent Literature

Patent Literature 1: Unexamined Japanese Patent Application Kokai Publication No. 2006-011891;
Patent Literature 2: Unexamined Japanese Patent Application Kokai Publication No. 2002-373300;
Patent Literature 3: Unexamined Japanese Patent Application Kokai Publication No. 2005-071276;
Patent Literature 4: Unexamined Japanese Patent Application Kokai Publication No. 2008-225622; and
Patent Literature 5: Unexamined Japanese Patent Application Kokai Publication No. H11-102394.

### Non-Patent Literature

Non-Patent Literature 1: M. Barth, M. Todd, "Intelligent transportation system architecture for a multi-station shared vehicle system," IEEE Intelligent Transportation System Conference, 2000, p. 240-245.

### Problems to be Solved by the Invention

However, the above related techniques do not take into account mental cost presenting the magnitude of mental strain the user will experience. Therefore, even though an action is proposed based on physical cost and monetary cost, the user sometimes does not choose the proposed action because the total cost including mental cost for the proposed action is higher than the total cost for another action.

The traveling cost in Patent Literature 3 is monetary cost such as expenses necessary for a vehicle to arrive at the destination, not including mental cost. The cost in Patent Literature 4 includes physical cost such as the distance between the address of the seller of the desired product and the address of the user and the delivery date of the desired product, and monetary cost such as the price of the desired product and freightage necessary for transferring over the above distance, not including the user's mental cost. The cost in Patent Literature 5 includes monetary cost such as production cost, transport cost, base cost, and delivery cost, not including the user's mental cost.

The present invention is invented in view of the above problems and an exemplary object of the present invention is to provide an action presentation device, action presentation system, computer-readable recording medium having an action presentation program recorded thereon, and action presentation method for presenting actions the user is likely to take in receiving goods or services.

### Disclosure of Invention

### Means for Solving the Problems

In order to achieve the above object, the action presentation system according to a first exemplary aspect of the present invention comprises:
an information storage means associating and storing information presenting at least part of a request regarding provision of goods or services, state information that is information presenting the state of a means for fulfilling at least part of the request, and action information that is information presenting model actions for fulfilling at least part of the request;
a request acquisition means acquiring request information presenting a request of a first user;
a state/action information acquisition means acquiring state information and action information associated with information presenting at least part of the request presented by the acquired request information from the information storage means;
a candidate creation means creating multiple candidate actions that are candidates for actions the first user can execute for fulfilling at least part of the request of the first user in the state presented by the acquired state information based on the model actions presented by the acquired action information;
a cost calculation means calculating the total cost of each of the created candidate actions including mental cost presenting the magnitude of mental strain the first user will experience from execution of the candidate action; and
a first presentation means presenting to the user a candidate action selected from the multiple created candidate actions based on the calculated total cost as the recommended candidate action for the first user to execute.

The action presentation device according to a second exemplary aspect of the present invention comprises:
a request acquisition means acquiring request information that is information presenting a request regarding provision of goods or services;
a state/action information acquisition means acquiring state information that is information presenting the state of a means for fulfilling at least part of the request presented by the acquired request information, and action information that is information presenting model actions for fulfilling at least part of the request from an information storage means;
a candidate creation means creating multiple candidate actions that are candidates for actions the first user can execute for fulfilling at least part of the request of the first user in the state presented by the acquired state information based on the model actions presented by the acquired action information;
a cost calculation means calculating the total cost of each of the created candidate actions including mental cost presenting the magnitude of mental strain the first user will experience from execution of the candidate action; and
a first presentation means presenting to the first user a candidate action selected from the multiple created candidate actions based on the calculated total cost as the recommended candidate action for the first user to execute.

The action presentation program recorded on a computer-readable recording medium according to a third exemplary aspect of the present invention allows a computer to function as:
a request acquisition means acquiring request information that is information presenting a request regarding provision of goods or services;
a state/action information acquisition means acquiring state information that is information presenting the state of a means for fulfilling at least part of the request presented by the acquired request information, and action information that is information presenting model actions for fulfilling at least part of the request from an information storage means;
a candidate creation means creating multiple candidate actions that are candidates for actions the first user can execute for fulfilling at least part of the request of the first user in the state presented by the acquired state information based on the model actions presented by the acquired action information;
a cost calculation means calculating the total cost of each of the created candidate actions including mental cost presenting the magnitude of mental strain the first user will experience from execution of the candidate action; and
a first presentation means presenting to the first user a candidate action selected from the multiple created candidate actions based on the calculated total cost as the recommended candidate action for the first user to execute.

The action presentation method according to a fourth exemplary aspect of the present invention comprises:
a request acquisition step of acquiring request information that is information presenting a request regarding provision of goods or services;
a state/action information acquisition step of acquiring state information that is information presenting the state of a means for fulfilling at least part of the request presented by the acquired request information, and action information that is information presenting model actions for fulfilling at least part of the request from an information storage mean;
a candidate creation step of creating multiple candidate actions that are candidates for actions the first user can execute for fulfilling at least part of the request of the first user in the state presented by the acquired state information based on the model actions presented by the acquired action information;
a cost calculation step of calculating the total cost of each of the created candidate actions including mental cost presenting the magnitude of mental strain the first user will experience from execution of the candidate action; and
a first presentation step of presenting to the first user a candidate action selected from the multiple created candidate actions based on the calculated total cost as the recommended candidate action for the first user to execute.

### Efficacy of the Invention

The present invention can present actions the user is likely to take.

### Brief Description of Drawings

FIG. 1 is a block diagram showing an exemplary configuration of the action presentation system according to Embodiment 1 of the present invention;
FIG. 2 (a) is an illustration presenting exemplary state information including library information and mobile library information stored in the information DB in Embodiment 1, (b) is an illustration presenting exemplary action information stored in the information DB in Embodiment 1, and (c) is an illustration presenting exemplary mental cost information stored in the information DB in Embodiment 1;
FIG. 3 is a block diagram showing an exemplary hardware configuration of the action presentation device according to Embodiment 1;
FIG. 4 is a flowchart presenting an exemplary action presentation procedure executed by the action presentation device according to Embodiment 1;
FIG. 5 is a chart presenting an exemplary request entered into the action presentation system and an exemplary recommended candidate action presented by the action presentation system in Embodiment 1;
FIG. 6 is a block diagram showing an exemplary configuration of the action presentation system according to Embodiment 2 of the present invention;
FIG. 7 (a) is an illustration presenting exemplary state information including library information stored in the information. DB in Embodiment 2, (b) is an illustration presenting exemplary user information stored in the information DB in Embodiment 2, (c) is an illustration presenting exemplary action information stored in the information DB in Embodiment 2, and (d) an illustration presenting exemplary mental cost information stored in the information DB in Embodiment 2;
FIG. 8 is a flowchart presenting an exemplary action presentation procedure executed by the action presentation device according to Embodiment 2;
FIG. 9 is a chart presenting an exemplary request entered into the action presentation system and an exemplary recommended candidate action presented by the action presentation system in Embodiment 2;
FIG. 10 is a chart for explaining an exemplary CD rental state involving users A and B in Modified Embodiment of Embodiment 2;
FIG. 11 (a) is an illustration presenting exemplary state information including CD information stored in the information DB in Modified Embodiment of Embodiment 2, (b) is an illustration presenting exemplary user information stored in the information DB in Modified Embodiment of Embodiment 2, (c) is an illustration presenting exemplary action information stored in the information DB in Modified Embodiment of Embodiment 2, and (d) an illustration presenting exemplary mental cost information stored in the information DB in Modified Embodiment of Embodiment 2;
FIG. 12 is a chart presenting an exemplary request entered into the action presentation system and an exemplary recommended candidate action presented by the action presentation system in Modified Embodiment of Embodiment 2;
FIG. 13 is a chart for explaining an exemplary vehicle rental state involving users A and B in Embodiment 3:
FIG. 14 is a block diagram showing an exemplary configuration of the action presentation system according to Embodiment 3 of the present invention;
FIG. 15 (a) is an illustration presenting exemplary state information including vehicle information stored in the information DB in Embodiment 3, (b) is an illustration presenting exemplary action information stored in the information DB in Embodiment 3, (c) is an illustration presenting exemplary location information stored in the information DB in Embodiment 3, and (d) an illustration presenting exemplary mental cost information stored in the information DB in Embodiment 3;
FIG. 16 is a flowchart presenting an exemplary action presentation procedure executed by the action presentation device according to Embodiment 3; and
FIG. 17 is a chart presenting an exemplary request entered into the action presentation system and an exemplary recommended candidate action presented by the action presentation system in Embodiment 3.

### Mode for Carrying Out the Invention

Embodiments of the present invention will be described in detail hereafter with reference to the drawings. In the figures, the same or corresponding components are referred to by the same reference numbers.

### (Embodiment 1)

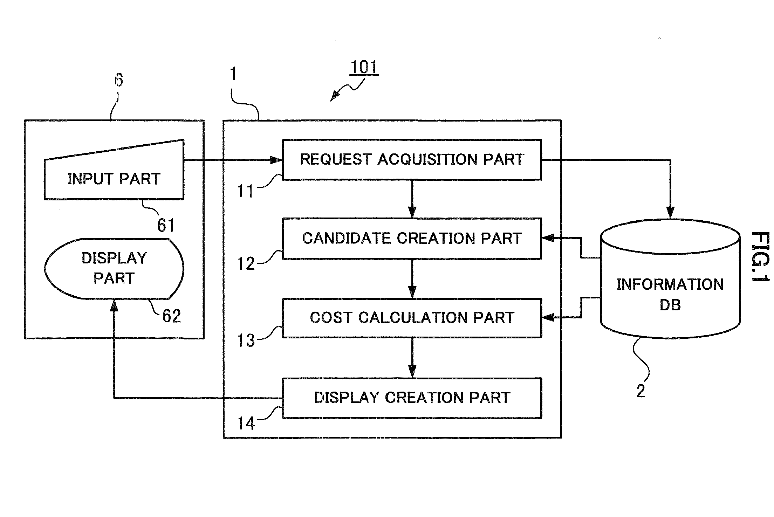

FIG. 1 is a block diagram showing an exemplary configuration of an action presentation system 101 according to Embodiment 1 of the present invention. The action presentation system 101 is a system presenting actions the user can take for receiving goods or services.

In this specification, the term "goods" refers to tangible objects satisfying the user's desire and is also termed "tangible goods." On the other hand, the term "services" refers to labor to satisfy the user's desire and is also termed "intangible goods." Goods and services may or may not require consideration for receiving them. In other words, goods or services can be provided for free or for profit. Goods or services are not necessarily the object of a business transaction.

In this embodiment, services to be provided are labor to be provided through goods shared by multiple users such as lending/return processing of books possessed by a library. In the following explanation, the action presentation system 101 is, but not limited to, a lending system used in providing services of lending books at a library. Furthermore, in the following explanation, actions the user can take for receiving services include, but are not limited to, an action "returning a book to the library today."

The action presentation system 101 is composed of an action presentation device 1, a not-shown database server having an information database ("information DB," hereafter) 2, and a terminal 6. The action presentation device 1 and information DB 2 can communicate with each other via a network (not shown). Similarly, the action presentation device 1 and terminal 6 can communicate with each other via a network. Here, the information DB 2 can be provided to the action presentation device 1 and/or consist of multiple databases. Furthermore, the terminal 6 can be part of the action presentation device 1 or an auxiliary device to the action presentation device 1.

Here, the information DB 2 and terminal 6 will be described before explaining the action presentation device 1.
The information DB 2 stores state information, action information, mental cost information, and address information presenting user addresses and the like. In this specification, the state information refers to various pieces of information regarding a means for fulfilling at least part of the user request in providing goods or services, and particularly includes information presenting the state of a means for fulfilling at least part of the user request.

In this specification, the user request regarding provision of goods or services includes not only a request for another user to execute some action in relation to provision of goods or services but also a request or desire of the user himself/herself for some action in relation to provision of goods or services. In other words, the request regarding provision of services includes, for example, the user's own desire "wishing to return a book today."

The means for fulfilling at least part of the user request in providing goods or services includes, for example, a facility or store providing goods or services, or goods used for providing goods or services. Then, the state information includes, for example, information presenting the state of a facility or store providing goods or services at a given time, information presenting the state of provision of goods or services at a given time, and information presenting the state of goods used for providing goods or services at a given time.

In this embodiment, as a means for fulfilling at least part of the user request "wishing to return a book today" in providing services such as book lending and returning, for example, there are two service-providing facilities, a mobile library visiting a specific location on a specific day ("a mobile library," hereafter) and a non-mobile library (simply "a library," hereafter). Then, the state information includes library information presenting the state of a library and mobile library information presenting the state of a mobile library.

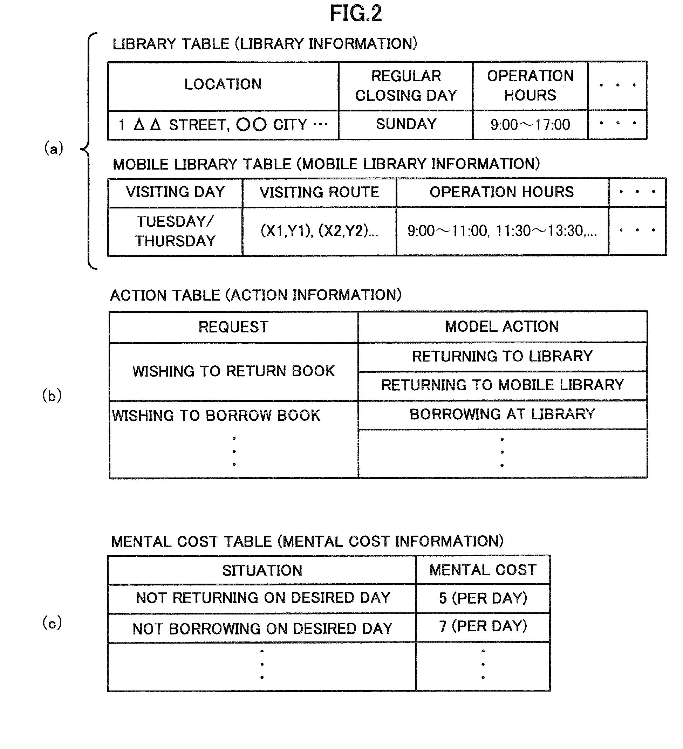

The information DB 2 stores multiple pieces of information constituting the library information in a library table having only one record as shown in FIG. 2 (a). The information stored in the record of the library table is categorized into fields "location" for information presenting the location of the library, "regular closing day" for information presenting the regular closing day of the library, and "operating hours" for information presenting the operating hours of the library.

The information DB 2 stores multiple pieces of information constituting the mobile library information in a mobile library table having only one record as shown in FIG. 2 (a). The information stored in the record of the mobile library table is categorized into fields "visiting day" for information presenting the day on which the mobile library visits (namely, visiting schedule), "visiting course" for information presenting the latitudes and altitudes of locations the mobile library visits (namely, visiting route) that are expressed by the X and Y coordinates, and "operating hours" for information presenting the operating hours of the mobile library at each location.

Furthermore, in this embodiment, the goods used for providing services such as book lending are books. Therefore, the state information includes information presenting the lending state of books to be lent. Additionally, the state information includes map information including information associating information presenting the address of the library with information presenting the latitude and altitude of the address of the library, and information associating information presenting the visiting point of the mobile library with information presenting the latitude and altitude of the visiting point. Here, the map information includes information associating information presenting the addresses of the users with information presenting the altitudes and latitudes of the addresses of the users.

The action information stored in the information DB 2 is information presenting model actions that are action patterns for fulfilling at least part of the user request regarding provision of goods or services ("the model actions the user can take for the request," hereafter).

In this embodiment, the model actions the user can take for the request "wishing to return a book today" regarding provision of services (in other words, the model actions for fulfilling part "wishing to return a book" of the request "wishing to return a book today" include actions "rerunning a book to the library" and "returning a book to the mobile library."

Then, the information DB 2 stores multiple pieces of information constituting the action information in an action table having multiple records as shown in FIG. 2 (b). The information stored in the records of the action table is categorized into fields "request" for information presenting at least part of the user request, and "model action" for information presenting a model action the user can take for the part of the request. Here, the content of information in the field "model action" of the action information may or may not vary depending on the content of information in the field "request" associated with that information (in other words, in the record in which that information is stored).

The information DB 2 stores multiple pieces of information constituting the mental cost information in a mental cost table having one or multiple records as shown in FIG. 2 (c). The information stored in the records of the mental cost table is categorized into fields "situation" for information presenting a situation that does not match the user request, and "metal cost" for information presenting a value of time cost, which is another kind of cost, converted from mental cost that will occur in the situation.

Here, the mental cost presents the magnitude of mental strain the user will experience and can be converted to another kind of cost. A method of converting the mental cost to another kind of cost will be described hereafter. In this embodiment, it takes 30 minutes for the user to return a book to the library while it takes 5 minutes for the user to return a book to the mobile library. Here, it is assumed that the day on which the user desires to return a book is not the visiting day of the mobile library; however, there will be the visiting day X days after the desired day. Then, if the user selects a candidate action 1 "returning a book on the desired day" and executes the selected action, the user has to return a book to the library. Then, it takes 30 minutes for the user to return a book. On the other hand, if the user selects and executes a candidate action 2 "returning a book X days after the desired day," the user can return a book to the mobile library. Then, it takes 5 minutes for the user to return a book.

Here, if the user selects the candidate action 2, the action presentation device 1 accumulates data presenting the value X ("X data," hereafter) in the information DB 2. The action presentation device I calculates the average of X presented by the accumulated X data, and calculates a conversion coefficient for converting mental cost to time cost based on the calculated average. More specifically, for example, if the average of X is a value "3," the mental cost the user will bear for returning a book three days after the desired day corresponds to a time cost of "25 minutes" that is the difference between "30 minutes" or the time required for returning a book in the case of executing the candidate action 1 and "5 minutes" or the time required for returning a book in the case of executing the candidate action 2. Therefore, the action presentation device 1 calculates a conversion coefficient of "8.33" (= 25 minutes / 3 days) for converting mental cost to time cost based on the ratio between the calculated difference in time cost of "25 minutes" and the mental cost value of "3 days." Then, the action presentation device 1 stores the calculated conversion coefficient in the information DB 2.

With the above method, the physical cost such as time cost and energy cost, monetary cost, and mental cost can be converted to another kind of cost. In other words, the candidate actions from which the user will bear the same strain have the same value for the user. Therefore, as in the above specific case, if the ratio of the difference in measurement of a first kind of cost between two candidate actions that the user considers have an equal value to the difference in measurement of a second kind of cost between them is obtained, the conversion coefficient can be calculated based on the obtained ratio. Furthermore, if the conversion coefficient is calculated, the first kind of cost can be converted to the second kind of cost by multiplying the first kind of cost by the conversion coefficient. For example, the mental cost converted to the time cost is considered to be the same kind of cost as (equivalent to) the time cost that is a time for the user to go to the mobile library. Then, these costs can be subject to operations such as addition.

The mental cost accompanying execution of some candidate action varies depending on the exchanging object (for example, "a book" or a service-providing good in providing service "lending a book " involving to the part "wishing to return a book" of the user request that will be fulfilled by executing a candidate action "returning a book X days later") and/or penalty (for example, penalty accompanying execution of a candidate action "returning a book X days later"). For example, in the above case, if the object to return is not a book but something expensive such as a piece of jewelry, the value of the above X is smaller in the event that the user undergoes penalty of being disqualified from receiving book-lending service for late return of a book.

Here, the information DB 2 stores book information associating information presenting the user request acquired by the request acquisition part 11 with information identifying the book lent out according to the user request, information presenting the lending period, and information presenting the scheduled return date.

The terminal 6 in FIG. 1 comprises an input part 61 and a display part 62. The input part 61 receives requests from the user. The display part 62 displays images presented by information sent from the display creation part 14 of the action presentation device 1. Here, the terminal 6 can be a PC (personal computer) connected to the action presentation device 1 via a network such as the Internet, or a cell-phone. Furthermore, the user can enter a request through a web page or through an e-mail.

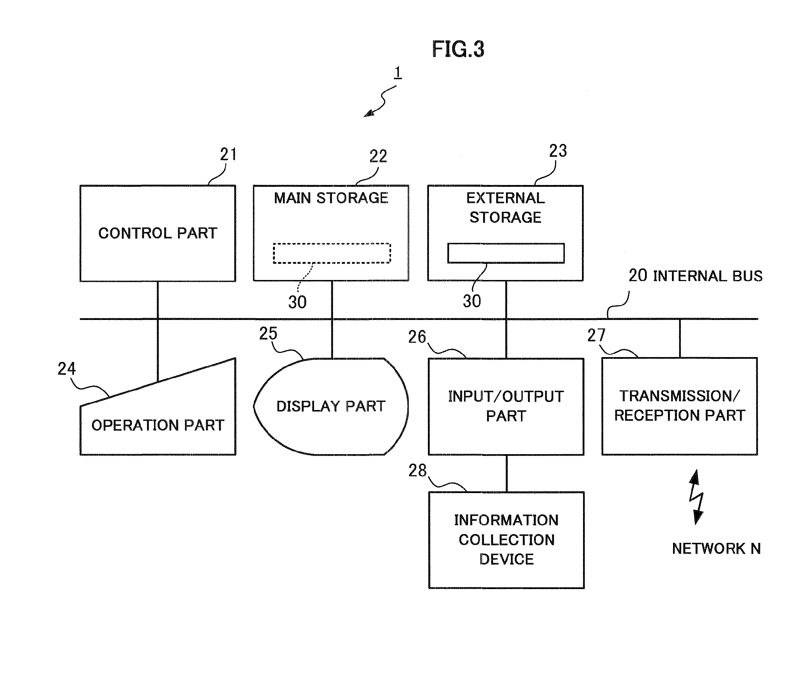

FIG. 3 is a block diagram showing an exemplary hardware configuration of the action presentation device 1 shown in FIG. 1. The action presentation device 1 comprises, as shown in FIG. 3, a control part 21, a main storage 22, an external storage 23, an operation part 24, a display part 25, an input/output part 26, a transmission/reception part 27, and an information collection device 28. The main storage 22, external storage 23, operation part 24, display part 25, input/output part 26, and transmission/reception part 27 are all connected to the control part 21 via an internal bus 20.

The control part 21 is composed of a CPU (central processing unit) or the like and executes procedures realizing the request acquisition part 11, candidate creation part 12, cost calculation part 13, and display creation part 14 as shown in FIG. 1 according to control programs 30 stored in the external storage 23.

The main storage 22 is composed of a RAM (random access memory) or the like. With the control programs 30 stored in the external storage 23 being loaded, the main storage 22 is used as the work area by the control part 21 for executing the loaded control programs 30.

The external storage 23 is composed of a nonvolatile memory such as a flash memory, hard disc, DVD-RAM (digital versatile disc random access memory), and DVD-RW (digital versatile disc rewritable), and stores programs for the control part 21 to execute procedures of the action presentation device 1 in advance. According to instructions from the control part 21 executing the programs, the external storage 23 supplies the control part 21 with data to be used in executing the programs and stores data supplied from the control part 21.

The operation part 24 is composed of a keyboard, a pointing device such as a mouse, and an interface device connecting the keyboard and pointing device to the internal bus 20. Various set values for mental cost information and action information, which will be described later, are entered via the operation part 24 and information presenting the entered various set values is supplied to the control part 21. Then, the control part 21 stores the supplied information in the information DB 2. Here, in an embodiment in which the terminal 6 of FIG. 1 is included in the action presentation device 1, the operation part 24 may be realized by the input part 61 of the terminal 6.

The display part 25 is composed of a CRT (cathode ray tube), LCD (liquid crystal display), or the like. In an embodiment in which the terminal 6 of FIG. 1 is included in the action presentation device 1, the display part 25 may be realized by the display part 62 of the terminal 6.

The input/output part 26 is composed of a serial interface or parallel interface. In an embodiment in which the terminal 6 of FIG. 1 is an auxiliary device to the action presentation device 1, the input/output part 26 is connected to the terminal 6.

The transmission/reception part 27 is composed of a network end terminal device or wireless communication device connected to a network, and a serial interface or LAN (local area network) interface connected thereto. The transmission/reception part 27 is connected to the terminal 6 via a network. The information collection device 28 collects state information, action information, and the like.

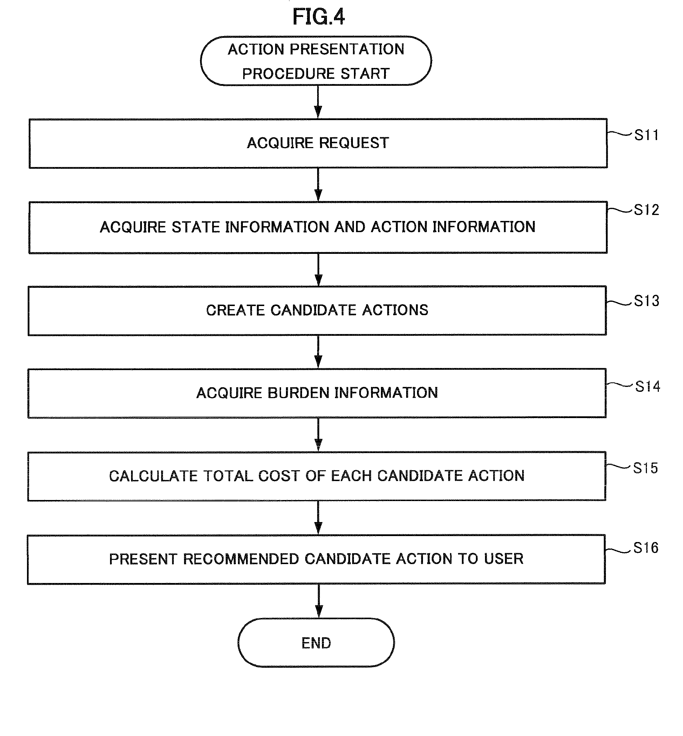

The request acquisition part 11, candidate creation part 12, cost calculation part 13, and display creation part 14 of the action presentation device 1 shown in FIG.1 are realized by the control part 21 executing the control programs 30 presenting the action presentation procedure as shown in FIG. 4 using hardware resources including the main storage 22, external storage 23, operation part 24, display part 25, input/output part 26, and transmission/reception part 27.

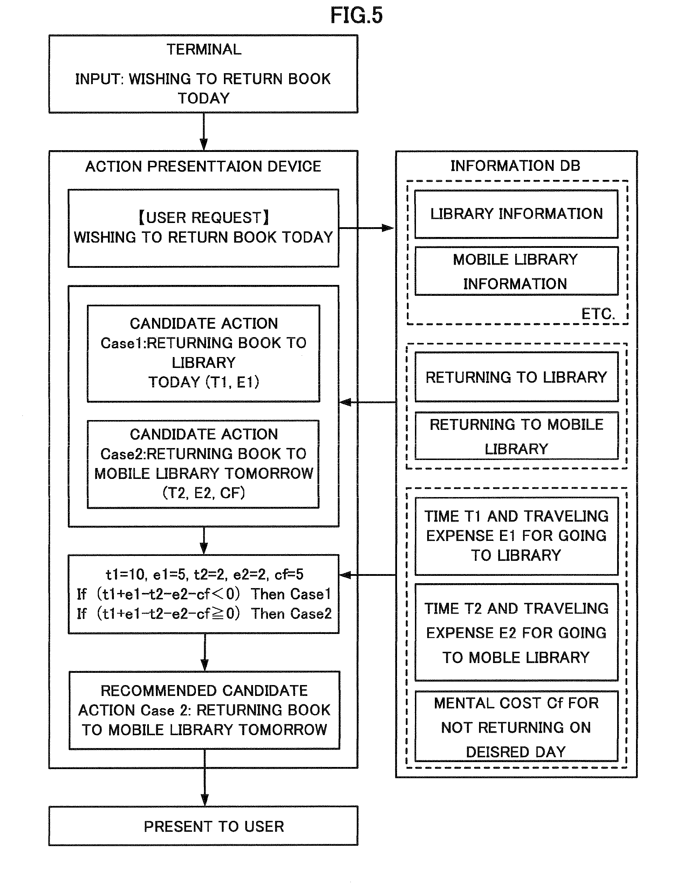

As the action presentation procedure in FIG. 4 starts, the request acquisition part 11 in FIG. 1 receives from the terminal 6 information presenting a request "wishing to return a book today" ("the request information," hereafter) in FIG. 5 entered by the user through the input part 61 of the terminal 6 (Step S11). The request acquisition part 11 sends the received information to the information DB 2 and candidate creation part 12. The information DB 2 stores the received information presenting the request. Here, besides the request "wishing to return a book today," information regarding which book will be returned to whom (which library) and regarding conditions such as return due date can additionally be entered or given to the action presentation device 1 in advance.

After the Step S11 of FIG. 4, the candidate creation part 12 acquires from the information DB 2 the state information and action information corresponding to information presenting a part "wishing to return a book" of the request "wishing to return a book today" acquired by the request acquisition part 11 (Step S12). Here, if the entered request is a request "wishing to return a book," the candidate creation part 12 acquires the state information and action information corresponding to information presenting the entered request itself.

More specifically, since the means for fulfilling the part "wishing to return a book" of the request includes the library and mobile library, the candidate creation part 12 acquires the library information and mobile library information from the information DB 2. Furthermore, after the request "wishing to return a book today" is entered by the user, the candidate creation part 12 makes reference to information in the field "model action" associated with information presenting the part "wishing to return a book" of the request "wishing to return a book today" in the action information of FIG. 2 (b). Then, the candidate creation part 12 acquires information presenting a model action "returning to the library" and information presenting a model action "returning to the mobile library" that are associated with the part "wising to return a book" of the request.

After the Step S12 of FIG. 4, the candidate creation part 12 creates multiple candidates for actions (namely, candidate actions) the user can execute in the state presented by the state information acquired in the Step S12 for fulfilling at least part of the request presented by the information received by the request acquisition part 11 based on the candidate actions presented by the action information acquired in the Step S12 (Step S13).

More specifically, the candidate creation part 12 makes reference to information in the field "regular closing day" of the library information shown in FIG. 2 (a), and finds that the regular closing day of the library is Sunday. Then, the candidate creation part 12 determines that, for example, today is Monday based on the system time and information presenting the calendar stored in the information DB 2. Subsequently, the candidate creation part 12 determines that today, which is Monday, does not fall on the regular closing day of the library, which is Sunday, and therefore the user can return a book to the library. Furthermore, the candidate creation part 12 makes reference to information in the field "visiting day" of the mobile library information and finds that the visiting day of the mobile library is Tuesday and Thursday.

Then, the candidate creation part 12 makes reference to information in the field "visiting day" of the mobile library information shown in FIG. 2 (A) and finds that the visiting day of the mobile library is Tuesday. Subsequently, the candidate creation part 12 determines that tomorrow is Tuesday and tomorrow falls on the visiting day of the mobile library; therefore, the user can return a book to the mobile library tomorrow. In this way, the candidate creation part 12 creates two candidate actions, Case 1 "returning a book to the library today" and Case 2 "returning a book to the mobile library tomorrow" as shown in FIG. 5.

After the Step S12 of FIG. 4, the cost calculation part 13 acquires from the information DB 2 information necessary for calculating the cost of each of the candidate actions created by the candidate creation part 12. Subsequently, the cost calculation part 13 calculates the cost the user will bear when he/she executes each of the candidate actions and creates burden information presenting the calculated cost (Step S14).

The burden information is information presenting the cost the user will bear for executing a candidate action. The burden information includes, for example, information presenting the time the user will spend for executing the candidate action ("time cost," hereafter), information presenting the money ("monetary cost," hereafter), information presenting the quantity of energy the user will consume in executing the candidate action ("energy cost," hereafter), and information presenting the magnitude of mental strain the user will receive from executing the candidate action (namely, mental cost).

More specifically, in the Step S14, the cost calculation part 13 receives information presenting the candidate actions, Case 1 "returning a book to the library today" and Case 2 "returning a book to the mobile library tomorrow" from the candidate creation part 12. Subsequently, the cost calculation part 13 searches map information stored in the information DB 2 for information presenting the latitude and altitude associated with information in the field "location" of the library information contained in the state information. Then, the cost calculation part 13 searches the map information for information presenting the latitude and altitude associated with user address information stored in the information DB 2. Subsequently, the cost calculation part 13 calculates the distance between the user's home and the library based on the latitudes and altitudes of the library and the user's home each presented by the found information. Then, the cost calculation part 13 calculates a time T1 required for the user to travel from his/her home to the library, for example, by car at a given speed. Furthermore, the cost calculation part 13 calculates the amount of gasoline consumed by a car travelling over the distance between his/her home and the library with a given fuel consumption (namely, the energy cost), and multiplies the calculated amount of gasoline by a gasoline price per litter to obtain a travelling expense E1. Here, information presenting a given speed, information presenting a given fuel consumption, and information presenting a gasoline price per litter can be stored in the information DB 2 in advance or entered by the user through the input part of the terminal device 6. Subsequently, the cost calculation part 13 employs information presenting the calculated time T1 and information presenting the travelling expense E1 as the burden information presenting the cost the user will bear when he/she executes the candidate action "returning a book to the library today."

Furthermore, the cost calculation part 13 searches the mal information for information presenting the latitudes and altitudes of multiple visiting points presented by information in the field "visiting route" of the mobile library shown in FIG. 2 (a). Then, the cost calculation part 13 calculates the distance between the latitude and altitude of the visiting point presented by the found information and the latitude and altitude of the user's home presented by the user address information for each visiting point and identifies the visiting point of which the calculated distance is shortest as the nearest visiting point. Subsequently, the cost calculation part 13 calculates a time T2 required for the user to travel from his/her home to the mobile library visiting the nearest visiting point by car and a travelling expense E2.

Furthermore, the cost calculation part 13 searches the mental cost information shown in FIG. 2 (c) for information presenting mental cost per day associated with information presenting a situation "not returning on the desired day." Then, the cost calculation part 13 calculates a cost CF by multiplying the mental cost value Cf "5 (per day)" presented by the found information (namely, the value of time cost converted from the user's mental cost per day in the situation "not returning on the desired day") by the number of days from the desired return date to the return date when the candidate action "returning a book to the mobile library tomorrow" is selected (namely, one day). Subsequently, the cost calculation part 13 employs information presenting the calculated time T2, information presenting the travelling expense E2, and information presenting the cost CF as the burden information presenting the cost the user will bear when he/she executes the candidate action Case 2 "returning a book to the library tomorrow."

After the Step S14 of FIG. 4, the cost calculation part 13 calculates the total cost of each candidate action based on the burden information calculated in the Step S 14 and selects the candidate action of which the calculated total cost is lowest as the recommended candidate action (Step S15). Subsequently, the cost calculation part 13 sends information presenting the selected, recommended candidate action to the display creation part 14.

More specifically, the cost calculation part 13 multiplies the time cost T1 and monetary cost E1, time cost T2 and monetary cost E2, and mental cost CF, which are presented by the burden information, by their respective given conversion coefficients to obtain values "t1 = 10" and "e1 =5," "t2 = 2"and "e2 = 2," and "cf = 5." This is for converting T1 and E1, T2 and E2, and CF to the same kind of cost (for example, any one kind of cost among time cost and energy cost, which are physical cost, monetary cost, and mental cost) ("the equivalent conversion," hereafter).

Then, the cost calculation part 13 determines that Case 1 has the lowest total cost among the candidate actions created by the candidate creation part 12 when t1 + e1 - (t2 + e2)-cf < 0 as shown in FIG. 5. On the other hand, the cost calculation part 13 determines that Case 2 has the lowest total cost when t1 + e1 - (t2 + e2) - cf ≥ 0. Here, t1 + e1 - (t2 + e2) - cf = 10 + 5 - (2 + 2) - 5 = 6 ≥ 0. Therefore, the cost calculation part 13 sends information presenting Case 2 "returning a book to the mobile library tomorrow" to the display creation part 14 as the candidate action recommended to the user ("the recommended candidate action," hereafter) because of the lowest total cost.

After the Step S15 of FIG. 4, the display creation part 14 creates an image displaying the recommended candidate action presented by the received information, sends the created image to the terminal 6 (Step S16), and then ends the action presentation procedure. Here, the terminal 6 displays an image presented by the information received from the display creation part 14 on the display part 62 (in other words, presenting the recommended candidate action to the user).

In this embodiment, the action presentation device 1 presents to the user the candidate action of which the calculated total cost is lowest as the recommended candidate action. However, this is not restrictive. The action presentation device 1 can present to the user candidate actions of which the calculated total cost is not lowest along with the recommended candidate action, or multiple candidate actions created by the candidate creation part 12 in the ascending order of total cost. Furthermore, the action presentation device 1 can present to the user the total cost for each candidate action, or itemized cost for each candidate action. In other words, the action presentation device I can present the total cost and the values of monetary cost, physical cost, and mental cost used for calculating the total cost or the ratios of monetary cost, physical cost, and mental cost to the total cost).

In this embodiment, the action presentation system 101 constitutes a free book lending service system and recommends the user an action fulfilling at least part of the user request relating to the book lending service such as "wishing to return a book today." However, this is not restrictive. The action presentation system 101 can constitute a system for providing (namely, selling) books, or goods, for profit and, for example, recommend the user an action fulfilling at least part of the user request relating to the book sales such as "wishing to buy a book today."

As described above, the action presentation system 101 of Embodiment 1 presents the action of the lowest total cost in consideration of not only the physical cost such as time cost and energy cost and the monetary cost but also the mental cost of the user. Therefore, the action the user is likely to take can be presented. Particularly, when the action presentation system 101 constitutes a rental system to lend books or a sharing system for multiple users to share books, presentation of an action the user is likely to take results in prompting the user to use the system, ensuring smooth operation of the rental system or sharing system (in other words, the system operator can operates the system smoothly).

Furthermore, with the above configuration, an action selected based on the total cost including the mental cost of the user is presented as the recommended candidate action. Therefore, an action the user is likely to take can be recommended.

Furthermore, with the above configuration, the mental cost converted to physical cost or monetary cost is added to the physical cost or monetary cost the user will bear for executing a candidate action to calculate the total cost of the candidate action. Therefore, the total cost of a candidate action can numerically indicate how likely the user is to take the candidate action. Then, an action the user is likely to take can be selected with accuracy.

### (Embodiment 2)

In Embodiment 2, an action presentation system 102 negotiating with a user B who is expected to execute a prerequisite action for the user A to execute the recommended candidate action about executing the prerequisite action (namely, cooperating with the user A) will be described. The action presentation system 102 has the same configuration as the action presentation system 101 according to Embodiment 1. Therefore, the same reference numbers as those used in Embodiment 1 are used for explaining the action presentation system 102 and the explanation of the same configuration as in Embodiment 1 will be omitted.

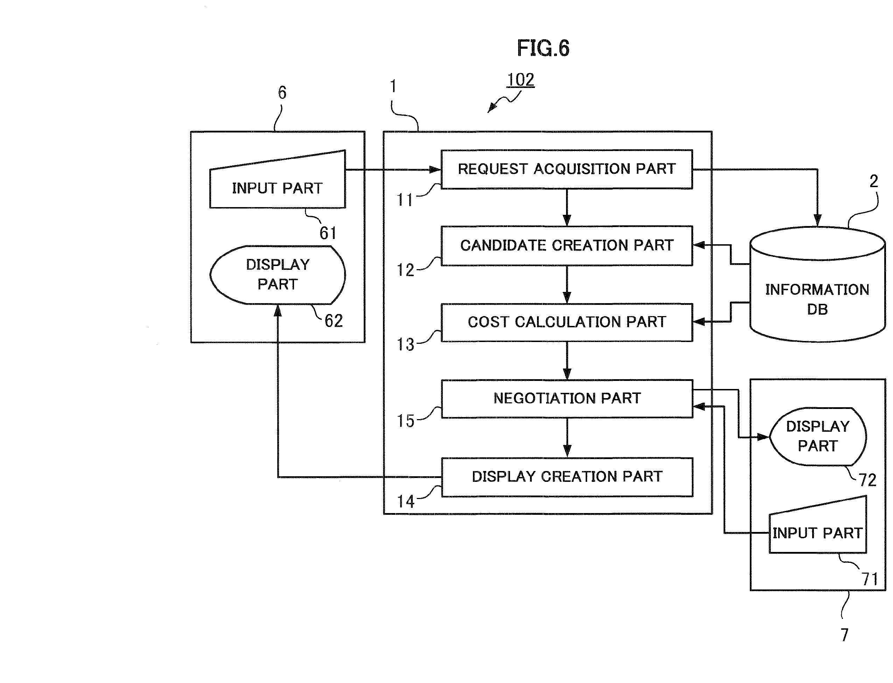

FIG. 6 is a block diagram showing an exemplary configuration of the action presentation system according to Embodiment 2 of the present invention. The action presentation system 102 comprises the action presentation device 1, information DB 2, and terminal 6 described in Embodiment 1, and additionally a terminal 7. Not only the action presentation device 1 and information DB 2 and the action presentation device I and terminal 6 as described in Embodiment 1 but also the action presentation device 1 and terminal 7 are communicable with each other via a network (not shown). Then, the transmission/reception part 27 in FIG. 3 is also connected to the terminal 7 in addition to the terminal 6 via a network.

Here, the terminal 7 can be, like the terminal 6, a part of the action presentation device 1 or an auxiliary device to the action presentation device 1. When the terminal 6 and/or terminal 7 in FIG. 6 are contained in the action presentation device 1, the operation part 24 in FIG. 3 may function as the input part 61 of the terminal 6 and/or the input part 71 of the terminal 7 and the display part 25 may function as the display part 62 of the terminal 6 and/or the display pat 72 of the terminal 7. On the other hand, when the terminal 6 and/or terminal 7 are auxiliary devices to the action presentation device 1, the input/output part 26 in FIG. 3 is connected to those auxiliary devices. The terminal 7 has the same configuration as the terminal 6 and the duplicated explanation will be omitted.

The action presentation system 102 comprises multiple terminals 6 and multiple terminals 7 each connected to the network. However, for simplified explanation, FIG. 6 shows a single terminal 6 and a single terminal 7 representing the multiple terminals 6 and 7 and only those representative terminals 6 and 7 will be described below.

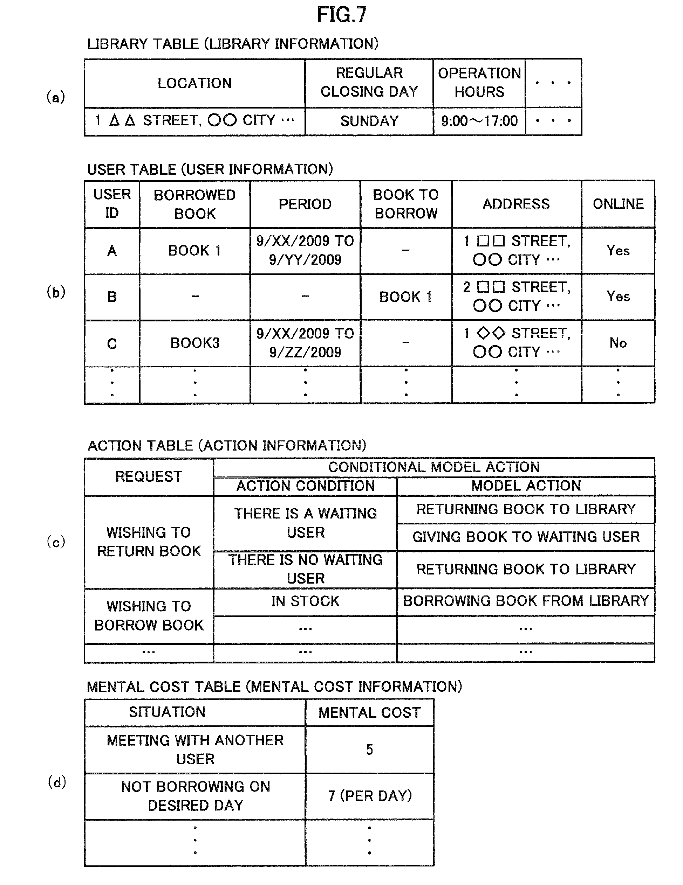

In Embodiment 2, the information DB 2 stores user information in addition to state information, action information, and mental cost information. The state information stored in the information DB 2 includes library information as shown in FIG. 7 (a) as in Embodiment 1. Information constituting the library information is stored in a library table having only one record as in Embodiment 1. The information stored in the record is categorized into fields "location" for information presenting the location of the library, "regular closing day" for information presenting the regular closing day of the library, and "operation hours" for information presenting the operation hours of the library. Here, the state information stored in the information DB 2 additionally includes map information and the like as in Embodiment 1.

The user information is various pieces of information regarding the users using the action presentation system 102 and, particularly, information presenting the states of the users. The information DB 2 stores multiple pieces of information constituting the user information in a user table having one or multiple records as shown in FIG. 7 (b). The information stored in the records of the user table is categorized into fields "user ID" for information identifying the user, "borrowed book" for information presenting the book the user is currently borrowing, "period" for information presenting the period over which the user borrows the book, "book to borrow" for information presenting the book the user wishes to borrow, "address" for information presenting the address of the user, and "online" for information presenting whether the terminal of the user is online. In other words, the user information shown in FIG. 7 (b) presents whether a user is borrowing a book and so on.

Information in the field "book to borrow" in Fig. 7 (b) is entered by the user from the terminal 6 and sent from the terminal 6 to the information DB 2. The user information of FIG. 7 (b) stored in the information DB 2 presents the following: the user A is borrowing a book 1; the user A's borrowing period of the book 1 is September XX, 2009 to September YY, 2009; the address of the user A is "1 □□ street, ○○ city, ..."; and the terminal 6 of the user A is currently online. The user information further presents the following: the user B wishes to borrow the book 1, which is borrowed by the user A; the address of the user B is "2 □□ street, ○○ city, ..."; and the terminal 7 of the user B is currently online. The user information further presents the following: the user C is borrowing a book 3; the user C's borrowing period of the book 3 is September XX, 2009 to September ZZ, 2009; the address of the user C is "1 ◊◊ street, ○○ city, ..."; and the terminal of the user C is currently offline. As described above, the user information is constituted by information on each user. Here, the user information stored in the information DB 2 further includes information associating information presenting the addresses of the users with information presenting the latitudes/altitudes of the addresses in addition to the above information.

The information DB 2 stores multiple pieces of information constituting the action information in an action table having multiple records as shown in FIG. 7 (c). The information stored in the action table is categorized into fields "request" for information presenting at least part of a user request, and "conditional model action" for information presenting a condition and a model action the user can take for fulfilling at least part of the request when the condition is satisfied. The content of information in the field "conditional model action" may or may not vary depending on the content of information in the field "request" associated with that information.

Since the field "conditional model action" has multiple fields, the action information has a hierarchical field structure. More specifically, the field "conditional model action" has fields "action condition" and "model action." Here, for example, a request "wishing to return a book today" is also a request for being freed from the responsibility for holding a borrowed book. Therefore, in this embodiment, the request "wishing to return a book today" is fulfilled by "giving a book the user wishes to return today to another user who wishes to borrow the book."

Then, information in the field "conditional model action" associated with information in the field "request" presenting "wishing to return a book" in FIG. 7 (c) consists of information in the field "action condition" presenting a condition that there is another user who wishes to borrow the book ("a waiting user," hereafter), and information in the field "model action" presenting a specific model action "giving the book to a waiting user" that the user can take for fulfilling the request when the condition is satisfied. Similarly, for the information presenting "wishing to return a book," information presenting a condition that there is no waiting user and information presenting a model action "returning a book to the library" when the condition is satisfied are categorized into the fields "action condition" and "model action."

The information DB 2 stores multiple pieces of information constituting the mental cost information in a mental cost table having multiple records as shown in FIG. 7 (d) as in Embodiment 1. The information stored in the records of the mental cost table is, as in Embodiment 1, categorized into fields "situation" for information presenting a situation that does not match the user request, and "mental cost" for information presenting a value of time cost converted from mental cost that will occur in the situation. More specifically, the mental cost information consists of information associating information presenting a situation that a user will meet with another user with information presenting a mental cost value presenting the magnitude of mental strain the user will experience in that situation.

Here, the following explanation will be made on the presumption that the above library information, user information, action information, and mental cost information are already stored in the information DB 2 at the time when the user A enters a request into the terminal 6. Furthermore, the user information is updated by the action presentation device 1 as needed each time a book is lent out/returned or in a given cycle.

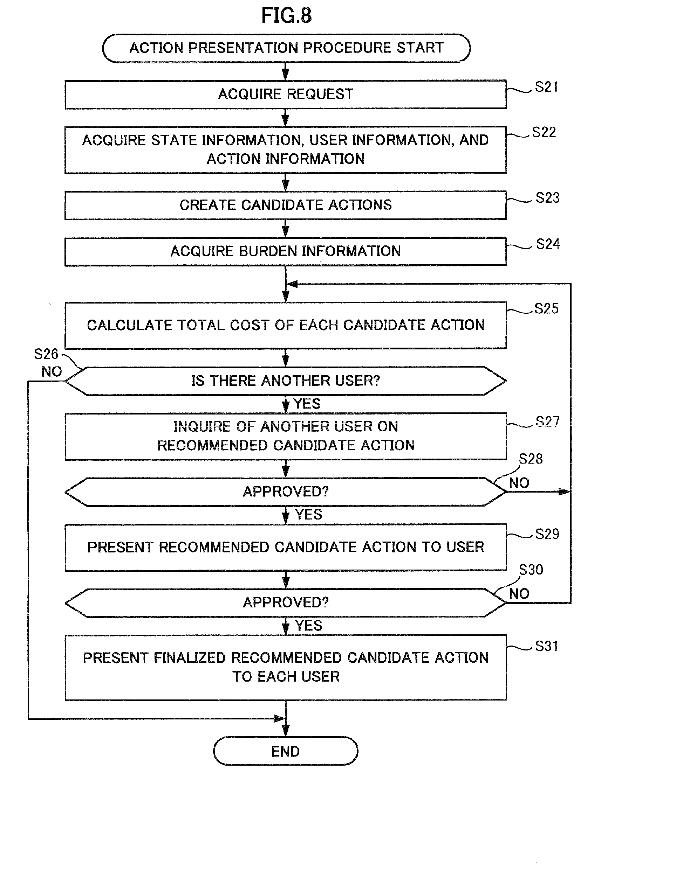

The control part 21 of the action presentation device 1 shown in FIG. 3 functions as the request acquisition part 11, candidate creation part 12, cost calculation part 13, and display creation part 14 as described in Embodiment 1, and additionally as a negotiation part 15 as shown in FIG. 6 by executing the action presentation procedure as shown in FIG. 8.

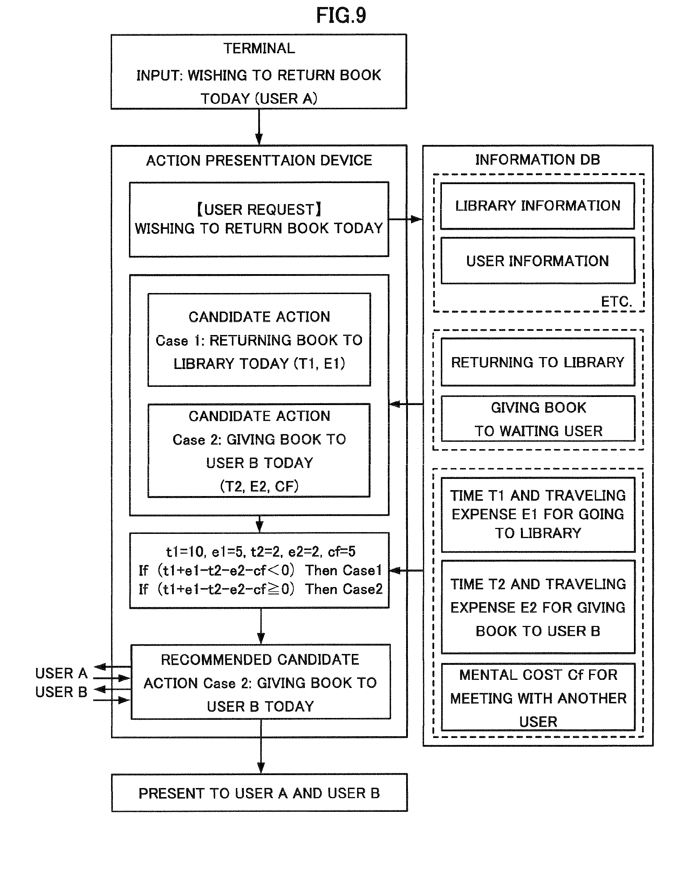

As the action presentation procedure of FIG. 8 starts, the request acquisition part 11 receives from the terminal 6 information presenting a request "wishing to return a book today" entered by the user A as shown in FIG. 9 (Step S21). Then, the candidate creation part 12 acquires from the information DB 2 the state information and action information corresponding to the information presenting the request acquired by the request acquisition part 11 (Step S22), and creates candidates actions the user can take in the situation presented by the acquired state information on the presumption that another user will cooperate based on model actions presented by the action information (Step S23).

More specifically, in this embodiment, it is assumed that there is no mobile library. Then, the means for fulfilling the request "wishing to return a book today" includes a library but does not include a mobile library. Therefore, the candidate creation part 12 acquires only the library information of FIG. 7 (a). Then, the candidate creation part 12 acquires the action information of FIG. 7 (c) and makes reference to information in the field "conditional model action" associated with information presenting the part "wishing to return a book" of the request "wishing to return a book today." Then, the candidate creation part 12 makes reference to information in the field "action condition" under the field "conditional model action" and acquires information presenting a condition "there is a waiting user" and information presenting a condition "there is no waiting user."

Subsequently, the candidate creation part 12 receives information identifying the user A from the terminal 6. Then, the candidate creation part 12 makes reference to information presenting a book 1 in the field "borrowed book" associated with information in the field "user" identifying the user A in the user information of FIG. 7 (b). Subsequently, in order to determine whether there is another user who wishes to borrow the book 1, which the user A wishes to return, the candidate creation part 12 makes reference to information "B" presenting the user B in the field "user ID" associated with information in the field "book to borrow" presenting the book 1 in the user information. Consequently, the candidate creation part 12 determines that the user B wishes to borrow the book 1 borrowed by the user A (in other words, the book the user wishes to return) (in other words, the condition "there is a waiting user" is satisfied).

Then, the candidate creation part 12 makes reference to information in the field "address" in the user information and acquires information presenting the address of the user A and information presenting the address of the user B. Here, the user information stored in the information DB 2 includes information associating information presenting the address of the user A with information presenting the latitude and altitude of the address of the user A and information associating information presenting the address of the user B with information presenting the latitude and altitude of the address of the user B. Using such information, the candidate creation part 12 calculates the distance between the address of the user A and the address of the user B. Then, the candidate creation part 12 makes reference to information in the field "online" in the user information and determines whether the terminal 6 of the user A and the terminal 7 of the user B are online. Here, if the distance between the address of the user A and the address of the user B is smaller than a given value and the terminals of the users A and B are online, the candidate creation part 12 determines that the user A can give the book to the user B today. Here, information presenting the given value is stored in the information DB 2 in advance.

Furthermore, the candidate creation part 12 makes reference to information in the field "regular closing day" in the library information and determines whether today falls on the regular closing day of the library using the same method as in Embodiment 1. If today does not fall on the regular closing day of the library, the candidate creation part 12 determines that user A can return the book to the library today. Then, the candidate creation part 12 creates candidate actions Case 1 "returning the book to the library today" and Case 1 "giving the book to the user B today."

After the Step S23 of FIG. 8, the cost calculation part 13 acquires from the information DB 2 information necessary for calculating the cost of each of the candidate actions created by the candidate creation part 12 and calculates the cost the user will bear when he/she executes each of the candidate actions using the acquired information (Step S24).

More specifically, receiving from the candidate creation part 12 information presenting the candidate action "returning the book to the library today" and information presenting the candidate action "giving the book to the user B today," the cost calculation part 13 makes reference to information in the field "location" in the library information of FIG. 7 (a) and information in the field "address" in the user information of FIG, 7 (b) as in Embodiment 1 and, based on the referred information, calculates a time T1 and traveling expense E1 for going to the library using the same method as in Embodiment 1. Subsequently, the cost calculation part 13 employs information presenting the calculated time T1 and information presenting the calculated travelling expense E1 as burden information presenting the cost the user will bear when he/she executes the candidate action Case 1 "returning the book to the library today."

Furthermore, the cost calculation part 13 makes reference to the field "address" in the user information and applies the above method to the referred information to calculate the distance between the address of the user A and the address of the user B. Subsequently, using the method of calculating the time T1 and traveling expense T2 required for going to the library from home as described in Embodiment 1, the cost calculation part 13 calculates a time T2 and traveling expense E2 required for travelling based on the calculated distance between the home of the user A and the home of the user B. Subsequently, the cost calculation part 13 employs the calculated time T2 and traveling expense E2 as the time T2 and traveling expense E2 required for the user A to give the book to the user B. Furthermore, the cost calculation part 13 searches the mental cost information of FIG. 7 (d) for information presenting the mental cost associated with information presenting the situation "meeting with another user." The cost calculation part 13 employs information presenting a mental cost value CF of "5" presented by the found information as burden information presenting the cost the user will bear when he/she executes the candidate action Case 2 "giving the book to the user B today" along with information presenting the time T2 and information presenting the travel expense E2.

After the Step S24 of FIG. 8, the cost calculation part 13 calculates the total cost of each candidate action based on the burden information as in Embodiment 1 (Step S25). Subsequently, the cost calculation part 13 selects the candidate action having the lowest calculated total cost as the recommended candidate action and sends information presenting the selected, recommended candidate action to the display creation part 14.

More specifically, the cost calculation part 13 multiplies the calculated T1 and E1, T2 and E2, and CF by their respective given conversion coefficients for equivalent conversion to obtain values "t1 = 10" and "e1 = 5," "t2 = 2" and "e2 = 2," and "cf = 5" shown in FIG. 9. Then, if t1 + e2 - t2 - e2 - cf < 0, the cost calculation part 13 determines that Case 1 has the lowest total cost among the candidate actions created by the candidate creation part 12. On the other hand, if t1 - e2 - t2 - e2 - cf ≥ 0, the cost calculation part 13 determines that Case 2 has the lowest total cost. Here, since t1 = 10, e1 = 5, t2 = 2, e2 = 2, and cf = 5, the cost calculation part 13 sends information presenting Case 2 "giving the book to the user B today" to the negotiation part 15 as the recommended candidate action having the lowest total cost.

After the Step S25 of FIG. 8, the negotiation part 15 determines whether there is any other user who is expected to execute any prerequisite action for executing the recommended candidate action Case 2 (Step S26). Here, in order for the user A to execute the recommended candidate action Case 2 "giving the book to the user B," the user B has to "receive the book." Therefore, the action "receiving the book" is a prerequisite action for executing the recommended candidate action Case 2 "giving the book to the user B" and "the user B" is the other user who is expected to execute a prerequisite action.

Then, the negotiation part 15 determines that the user B is the other user (Step S26; Yes). The negotiation part 15 5 sends to the terminal 7 of the user B information presenting an inquiry whether the user B will approve or disapprove the user A, who entered the request, executing the recommended candidate action Case 2 (in other words, whether the user B will cooperate with the user A and execute the prerequisite action for the recommended candidate action Case 2) (Step S27). The terminal 7 displays the inquiry presented by the information received from the negotiation part 15 on the display part 72. Seeing the display on the terminal 7, the user B enters the response to the inquiry, approval or disapproval, into the input part 71. The terminal 7 sends information presenting the response to the negotiation part 15.

Here, the negotiation part 15 may send information presenting benefit of the user B from the user A executing the recommended candidate action Case 2 (or from the user B executing the prerequisite action for the recommended candidate action Case 2) along with the inquiry whether the user B will approve or disapprove the user A executing the recommended candidate action Case 2. In such a case, the terminal 7 displays on the display part 72 the benefit presented by the received information along with the inquiry presented by the information received from the negotiation part 15. This is for giving the other user incentive (motivation) for cooperating with the user executing the recommended candidate action.

Here, the benefit includes consideration for the action (namely, the prerequisite action for the recommended candidate action) of the other user, and/or social or environmental contribution. The benefit includes, for example, consideration such as money (including cashback as return of consideration for provided service, and discount) and points exchangeable for some perquisite in receiving services, and social or environmental contribution such as time saving and energy saving.

After the Step S27 of FIG. 8, the negotiation part 15 receives from the terminal 7 information presenting the response, approval or disapproval, of the user B to the inquiry and determines the response presented by the received information is approval or disapproval (Step S28). Here, if the response to the inquiry is approval (Step 28; Yes), the negotiation part 15 sends information presenting the recommended candidate action Case 2 to the display creation part 14. The display creation part 14 creates an image displaying the recommended candidate action Case 2 presented by the received information and sends information presenting the created image to the terminal 6 (Step S29). The terminal 6 displays the image presented by the received information on the display part 62. After seeing the recommended candidate action Case 2 presented on the display part 62 of the terminal 6, the user A enters an accept (select) response into the input part 61 of the terminal 6 if he/she has intention to execute the recommended candidate action Case 2, or enters a rejection (dismiss) response if he/she has no intention to execute the recommended candidate action. The above inquiry and response may be made through a web page or e-mail. Once the response is entered, the terminal 6 sends back information presenting the entered response.

Then, the negotiation part 15 determines whether the response presented by the information received from the terminal 6 is rejection (Step S30). If the response of the user who entered the request is acceptance (Step 30; Yes), the negotiation part 15 sends to the display creation part 14 information presenting Case 2 again. The display creation part 14 creates an image displaying the decision that the user A has selected Case 2 "giving the book to the user B today" presented by the information received from the negotiation part 15, and the user B will cooperate with the user A (in other words, the recommended candidate action Case 1 is finalized as the candidate action to be executed by the user A). Subsequently, the display creation part 14 sends information presenting the created image to the terminals 6 and 7 (Step S31) and ends the procedure. Here, the terminals 6 and 7 display the image presented by the received information on the display parts 62 and 72, respectively, so as to present to the user A and user B the recommended candidate action Case 2 and the decision that the user A will execute the recommended candidate action Case 2 with the cooperation of the user B.

Here, in the Step S26, if there is no other user who is expected to execute a prerequisite action for the recommended candidate action (Step S26; No), the recommended candidate action created in the Step S23 is Case 1 "returning the book to the library today." The recommended candidate action Case 1 does not require a prerequisite action of any other user. Therefore, the display creation part 14 creates an image displaying the recommended candidate action Case 1, sends information presenting the created image only to the terminal 6 (Step S31), and then ends the procedure. Here, the terminal 6 displays the image presented by the received information on the display part 62 so as to present the recommended candidate action to the user.

In the Step S28, if the negotiation part 15 determines that the response of the user B to the inquiry is disapproval (Step S28; No), the processing returns to the Step S25. Subsequently, the cost calculation part 13 reselects the candidate action Case 1 having the lowest total cost among the candidate actions excluding the disapproved, recommended candidate action Case 2 as a new recommended candidate action, and sends information presenting the reselected, recommended candidate action Case 1 to the negotiation part 15. Subsequently, the above processing from the Step 26 is executed.

In the Step S30, if the negotiation part 15 determines that the response of the user A to the inquiry is rejection (dismiss) (Step S30; No), the processing returns to the Step S25. Subsequently, the cost calculation part 13 reselects the candidate action Case I having the lowest total cost among the candidate actions excluding the rejected (dismissed), recommended candidate action Case 2 as a new recommended candidate action, and sends information presenting the reselected, recommended candidate action Case 1 to the negotiation part 15. Subsequently, the above processing from the Step 26 is executed.

### (Modified Embodiment of Embodiment 2)

In Modified Embodiment of Embodiment 2, the action presentation device 1 constitutes a rental system for renting out CDs (compact discs) ("rental," hereafter). Here, the action presentation system according to Modified Embodiment of Embodiment 2 has the same configuration as the action presentation system 102 according to Embodiment 2. Therefore, the following explanation will be made using the same reference numbers and the explanation of the same configuration as in Embodiment 1 will be omitted.

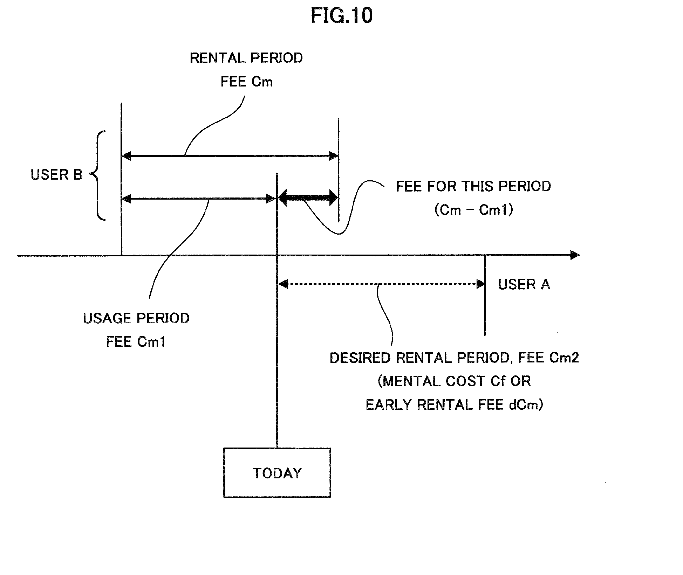

The CD rental system has users A and B. The user A has a request "wishing to rent a CD today" as shown in FIG. 10. However, the CD is rented out to the user B and the last day of the user B's rental period (return due date) of the CD is several days after today. Therefore, it is difficult for the user A to rent the CD today. Here, the user B has already used the CD. If the user B returns the CD today and the user A can rent the CD today, the user A's request "wishing to rent a CD today" is fulfilled.

The user B has paid a fee Cm for the entire rental period; therefore, he/she has no incentive for returning the CD earlier than the return due date. Here, if the charge by the day from the first day of the rental period to today (for example, a value of the daily rate multiplied by the number of days from the first day of the rental period to today) is Cm1, the charge by the day for the remaining rental period (for example, a value of the daily rate multiplied by the number of days from the following day to the last day of the rental period) is Cm - Cm 1. Then, if the CD rental service provider ("the service provider," hereafter) returns the charge by the day for the remaining period (Cm - Cm1) to the user B, the user B is given incentive for returning the CD today. Furthermore, the user A will pay to the service provider an early rental fee dCm as consideration for renting the CD today in addition to a rental fee Cm2 for renting the CD for a desired rental period. Here, the earlier rental fee dCm the user A will pay to the service provider is higher than the charge by the day (Cm - Cm1) the service provider returns to the user B. Then, the service provider has incentive for asking the user B to return the CD today and renting the returned CD to the user A today.

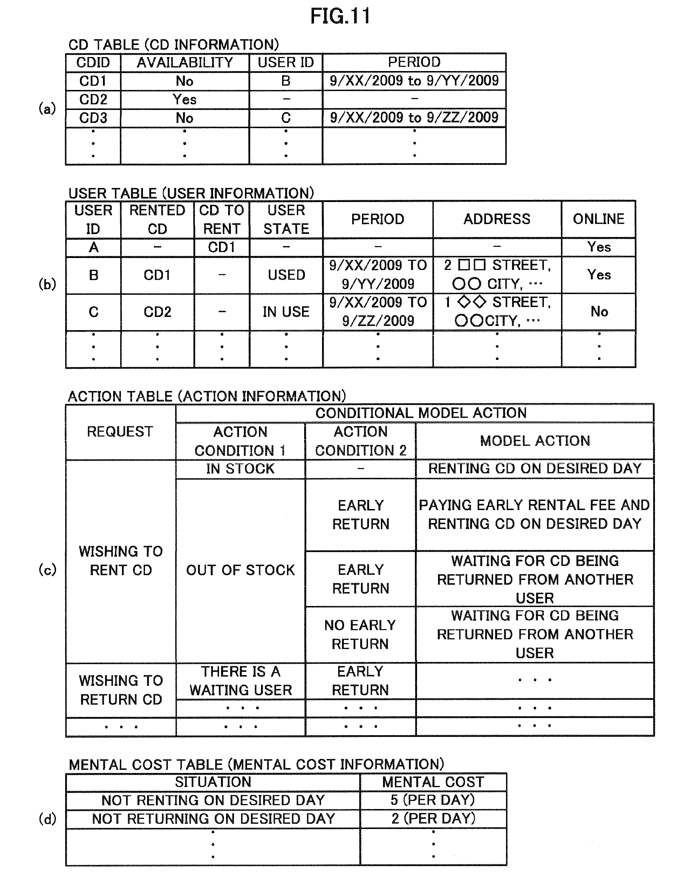

The information DB 2 of the action presentation system 102 constituting a CD rental system stores state information, user information, action information, and mental cost information as in Embodiment 2. The state information stored in the information DB 2 of Modified Embodiment of Embodiment 2 further includes CD information presenting CD rental states. Information constituting the CD information is stored in a CD table having multiple records as shown in FIG. 11 (a). The information stored in the records is categorized into fields "CD ID" for information identifying the CD, "availability" for information presenting whether the CD is rented out, "user ID" for information identifying the user renting the CD, and "period" for information presenting the rental period. The CD information of FIG. 11 (a) presents that a CD 1 is rented out to the user B from September XX, 2009 to September YY, 2009. This CD information further presents that a CD 2 is not rented out and a CD 3 is rented out to the user C from September XX, 2009 to September ZZ, 2009. In this way, the CD information consists of information on each CD.

Additionally, the state information includes map information as in Embodiment 2. Furthermore, since the CDs are rented out at the stores, the state information includes store information corresponding to the library information described in Embodiment 2. Furthermore, the state information includes information associating information presenting rental periods with information presenting the rental fees required for renting a CD for the rental periods.

The user information stored in the information DB 2 of Modified Embodiment of Embodiment 2 is stored in a user table having multiple records as shown in FIG. 11 (b). The information stored in the records of the user table is categorized into fields "user ID" for information identifying the user, "rented CD" for information presenting the CD the user is currently renting, "CD to rent" for information presenting a CD the user wishes to rent, "user state" for information presenting the current state of the user, "period" for information presenting the rental period, "address" for information presenting the address of the user, and "online" for information presenting whether the terminal of the user is online. The information presenting a CD the user wishes to rent and information presenting the current state of the user are entered by the user from the terminal 6 or 7 and sent from the terminal 6 or 7 to the information DB 2.

The user information shown in FIG. 11 (b) presents that the user has a request for renting a CD 1 and the user B is renting the CD 1. The user information further presents the following: the user B's rental period of the CD 1 is September XX, 2009 to September YY, 2009; the user B has already used the CD1 (in other words, finished the use) and has intension to return the CD ("returnable," hereafter); the address of the user B is "2 street, ○○ city, ..."; and the terminal of the user B is currently online. The user information further presents the following: the user C is renting a CD 2; the user C's CD rental period is September XX, 2009 to September ZZ, 2009; and the user C is still using the CD2 (in other words, in use) and the user C cannot return the CD 2; the address of the user C is "1 ◊◊ street, ○○ city, ..."; and the terminal of the user C is currently offline. As described above, the user information consists of information on each user.

The information DB 2 stores multiple pieces of information constituting the action information in an action table having multiple records as shown in FIG. 11 (c) as in Embodiment 2. The information stored in the records of the action table of FIG. 11 (c) is categorized into fields "request" for information presenting at least part of the user request, and "conditional model action" for information presenting given conditions and a model action the user can take for fulfilling at least part of the request when the conditions are satisfied. The content of information in the field "conditional model action" may or may not be different depending on the content of information in the field "request" associated with that information.

Since the field "conditional model action" has multiple fields, the action information has a hierarchical field structure. More specifically, the field "conditional model action" includes fields "action condition 1," "action condition 2," and "model action." The information in the field "conditional model action" associated with information in the field "request" presenting "wishing to rent a CD" of FIG. 11 (c) consists of information in the field action condition 1 presenting a condition "the CD the user wishes to rent is in stock ("in stock," hereafter)" and information in the field "model action" presenting a specific model action "renting a CD on the desired day," which the user can take for fulfilling the request when the condition "in stock" is satisfied. The above information in the field "conditional model action " further consists of information in the field "action condition 1" presenting a condition that the CD the user wishes to rent is out of stock ("out of stock," hereafter), information in the field "action condition 2" presenting a condition that a CD rented to some other user is returned early on the desired day of the user ("early return," hereafter) when the condition "out of stock" is satisfied, and information in the field "model action" presenting a model action "paying an early rental fee and renting a CD on the desired day," which the user can take for fulfilling the request when the conditions "out of stock" and "early return" are satisfied.

The information DB 2 stores multiple pieces of information constituting the mental cost information in a mental cost table having multiple records as shown in FIG. 11 (d) as in Embodiment 2. The information stored in the records of the mental cost table is categorized into fields "situation" for information presenting a situation that does not match the user request and "mental cost" for information presenting a value of time cost converted from mental cost per day that will occur in the situation. More specifically, the mental cost information consists of, as shown in FIG. 11 (d), information associating information presenting a situation that the user cannot rent a CD on the desired day or information presenting a situation that the user cannot return a CD on the desired day with information presenting a value of mental cost presenting the magnitude of mental strain per day the user will experience in such a situation.

Here, the following explanation will be made on the assumption that the above CD information, user information, action information, and mental cost information are already stored in the information DB 2 when the user A enters the request into the terminal 6. Furthermore, the CD information and user information are updated by the action presentation device I as needed each time a CD is rented out/returned or in a given cycle.

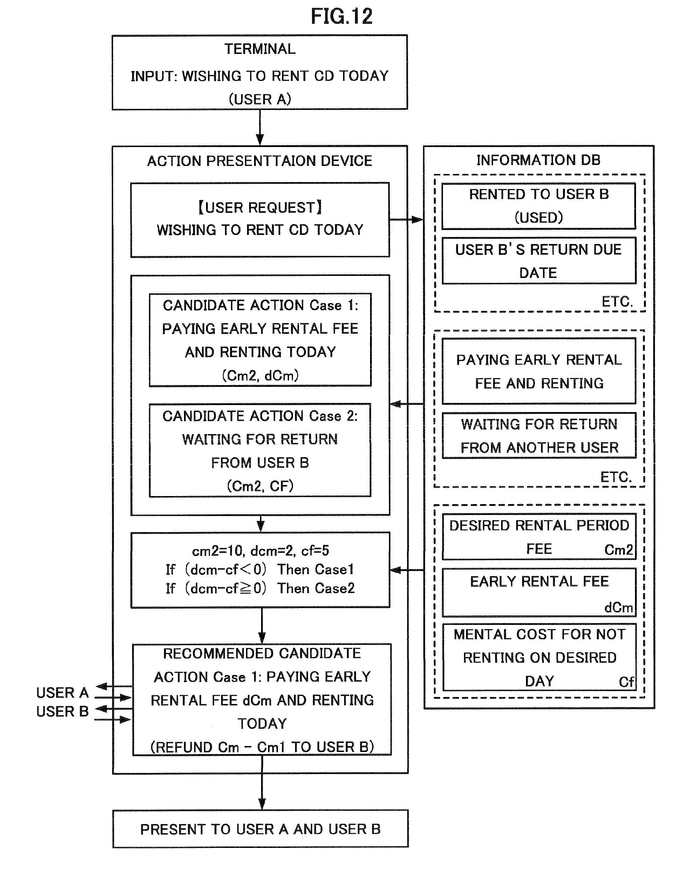

The control part 21 of the action presentation device 1 shown in FIG. 3 executes the action presentation procedure as shown in FIG. 8 as in Embodiment 2. As the action presentation procedure of FIG. 8 starts, the request acquisition part 11 receives from the terminal 6 information presenting the request "wishing to rent a CD today" entered by the user A as shown in FIG. 12 (Step S21). Then, the candidate creation part 12 acquires from the information DB 2 the state information, user information, and action information including the CD information corresponding to information presenting the request acquired by the request acquisition part 11 (Step S 22), and creates candidate actions the user A can take in the state presented by the acquired state information on the presumption that other users cooperate based on the model actions presented by the acquired action information (Step S23).

More specifically, since the means for fulfilling the request "wishing to rent a CD today" involves a CD the user A wishes to rent, the candidate creation part 12 acquires the CD information that is various pieces of information regarding the CD. Furthermore, a cooperative user cooperating for fulfilling the request "wishing to rent a CD today" involves another user who is renting the CD the user A wishes to rent. The candidate creation part 12 acquires the user information that is various pieces of information regarding the other user who is renting the CD.

Then, the candidate creation part 12 makes reference to the action information of FIG. 11 (b) and makes reference to information in the field "conditional model action" associated with the part "wishing to rent a CD" of the request "wishing to rent a CD today." Then, the candidate creation part 12 makes reference to information in the field "action condition 1" under the field "conditional model action" and acquires information presenting the condition "in stock" and information presenting the condition "out of stock." Subsequently, the candidate creation part 12 receives the user ID identifying the user A that is entered into the input part 61 of the terminal 6 by the user A and information identifying the CD the user A wishes to rent in order to determine whether the conditions presented by the acquired information are satisfied (in other words, whether the CD the user A wishes to rent is in stuck). Then, the candidate creation part 12 makes reference to information in the field "availability" constituting the CD information shown in FIG. 11(a) and associated with information identifying the CD1 the user A wishes to rent. If the CD1 the user A wishes to rent is not in stock based on the refereed information, the candidate creation part 12 determines that the condition "out of stock" is satisfied.

Subsequently, the candidate creation part 12 makes reference to information in the field "action condition 2" associated with information presenting the condition "out of stock" in the action information of FIG. 11 (c). Then, the candidate creation part 12 determines whether the condition presented by the referred information is satisfied (in other words, the rented CD I will be returned early on the user A's desired day). More specifically, the candidate creation part 12 makes reference to information in the field "user ID" associated with information identifying the CD1 in the CD information of FIG. 11 (a). Then, the candidate creation part 12 makes reference to information in the field "user state" associated with the referred information (namely, information identifying the user B) and information identifying the CD1 in the user information of FIG. 11 (b). Consequently, the candidate creation part 12 finds that the CD1 is rented to the user B and the CD1 rented to the user B has already been used. Then, the candidate creation part 12 makes reference to information in the fields "address" and "online" constituting the user information of FIG. 11 (b) and associated with information identifying the user B, and the store information contained in the state information. If the distance between the address of the user B and the store is smaller than a given value and the terminal of the user B is online, the candidate creation part 12 determines that the user B can make early return of the CD today. On the other hand, if the distance is not smaller than a given value or the terminal of the user B is offline, the candidate creation part 12 determines that the user B cannot make early return of the CD today. Here, the given value is stored in the information DB 2 in advance. Furthermore, the method of calculating the distance between the address of the user B and the store is the same as described in Embodiment 1 and, therefore, the explanation is omitted.

Subsequently, the candidate creation part 12 makes reference to information in the field "model action" associated with information presenting the condition "in stock" and information presenting the condition "early return." Subsequently, the candidate creation part 12 creates two candidate actions, Case1 "paying an early rental fee and renting the CD today" and Case 2 "waiting for the CD being returned from the user B" based on the model actions presented by the referred information (in other words, the model actions the user can take for fulfilling at least part of his/her request when both the condition "in stock" and the condition "early return" are satisfied).

After the Step S23 of FIG. 8, the cost calculation part 13 acquires from the information DB 2 information necessary for calculating the cost of each of the candidate actions created by the candidate creation part 12 as in Embodiment 2, and calculates the cost the user will bear when he/she executes each of the candidate actions using the acquired information (Step S 24).

More specifically, the cost calculation part 13 makes reference to fee information contained in the state information and acquires information presenting a rental fee Cm2 and information presenting an early rental fee dCm the user A will bear when the he/she executes the candidate action Case 1 "paying an early rental fee and renting the CD today." Then, the cost calculation part 13 similarly acquires from the fee information a fee Cm2 the user A will bear when he/she executes the candidate action Case 2 "waiting for the CD being returned from the user B." Then, the cost calculation part 13 makes reference to information in the field "mental cost" associated with information presenting the situation "not renting on the desired day" in the mental cost information shown in FIG. 11 (d), and multiplies the mental cost value per day, Cf, presented by the referred information by the number of days from the desired rental date to the user B's return due date (namely, the last day of the rental period) to obtain a mental cost CF. Subsequently, the cost calculation part 13 multiplies the acquired monetary cost Cm2 and dCm and the calculated mental cost CF by their respective given conversion coefficients for equivalent conversion so as to obtain values "cm = 10," "dcm = 2," and "cf= 5" shown in FIG. 12.

Here, the total cost of Case 1 "paying an early rental fee and renting the CD from another user today" is the total of the rental fee cm2 and early rental fee dcm. The total cost of Case 2 "waiting for the CD being returned from another user" is the total of the rental fee cm2 and the mental cost cf that will occur from not renting the CD on the desired day. Therefore, if dcm - cf < 0, the cost calculation part 13 determines that Case 1 has the lowest total cost among the candidate actions created by the candidate creation part 12. On the other hand, if dcm - cf ≥ 0, the cost calculation part 13 determines that Case 2 has the lowest total cost. Here, since cm2 = 10, dcm = 2, and cf = 5, the cost calculation part 13 sends information presenting Case 1 as the recommended candidate action to the negotiation part 15.

After the Step S24 of FIG. 8, the action presentation device 1 executes the processing from the Step 25 to the step S31 described in Embodiment 2 and then ends the action presentation procedure.

As described above, the action presentation system 102 according to Embodiment 2 and the action presentation system according Modified Embodiment of Embodiment 2 recommend to the user an action having the lowest total cost in consideration of not only the user's mental cost but also the state of another user, thereby presenting an action the user is likely to take. Consequently, when the action presentation system 101 constitutes a book or CD rental or sharing system, presentation of an action the user is likely to take results in prompting the users to use the system, whereby the operator of the rental or sharing system can operate the system smoothly.

Furthermore, with the above configuration, a user different from the user who will execute the recommended candidate action is negotiated to execute a prerequisite action for the user to execute the recommended candidate action. The recommended candidate action for which the negotiation was successful is presented to the user. Therefore, an action for execution of which cooperation of another user is inevitable can also be presented to the user.

Furthermore, with the above configuration, benefit for another user from executing a prerequisite action for the recommended candidate action is presented, whereby the other user is given incentive for executing the action.

The action presentation system 102 according to Embodiment 2 is not restricted to presentation of an action of the lowest cost in a rental or sharing system. For example, the action presentation system 102 is applicable to presentation of an action for receiving services at a hospital or bank in exchange for a numbered ticket. For example, in some case, assuming that a user obtained a numbered ticket and waited for a long time and has not received any service yet, then, this user may want to give the ticket to another user. In some other case, assuming that there is a user who wants to exchange his/her ticket with any other user's because he/she has something urgent and there is another user who is willing to exchange; then, the cost may be reduced for both, the one who gives a numbered ticket and the one who is given the numbered ticket.

In this embodiment, the action presentation system 102 constitutes a system providing CD rental services for profit in which, for example, an action for fulfilling the user request relating to the CD rental service, such as "wishing to return a CD today," is recommended to the user. However, this is not restrictive. The action presentation system 101 can constitute a system providing (namely, selling) CDs or goods for profit in which, for example, if the user A has a request "wishing to buy a CD today" relating to the CD sales, an action "buying the CD from the user B today" is recommended to the user as an action fulfilling the request.

### (Embodiment 3)

In Embodiment 3, an action presentation system 103 constituting a vehicle rental system presenting to the user a recommended candidate action the user A can take at his/her current location for renting a vehicle will be described. Here, the action presentation system 103 has the same configuration as the action presentation system 102 according to Embodiment 2. The same reference numbers as those in Embodiment 2 will be used for explaining the action presentation system 103 and the explanation of the same configuration as in Embodiment 2 will be omitted.

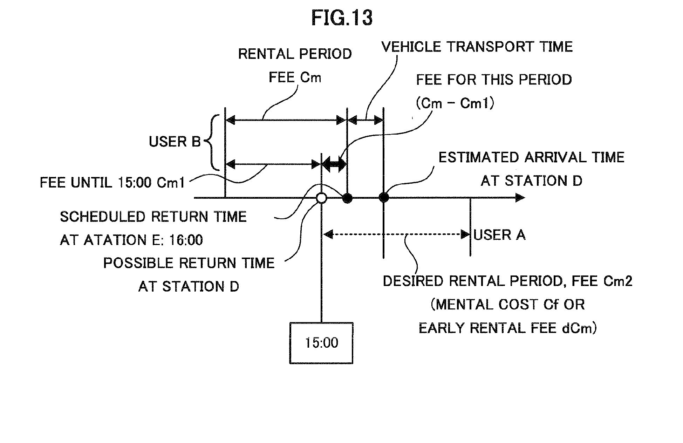

The vehicle rental system has users A and B. The user A has a request "wishing to rent a vehicle at 15:00." However, there is no vehicle available for the user A at 15:00 or the time at which the user A wishes to rent a vehicle. Here, a vehicle is rented to the user B and the expiration of the user B's rental period (return due time) of the vehicle is 16:00, which is one hour later from the time the user A wishes to rent a vehicle as shown in FIG. 13. Here, the user A wishes to rent a vehicle at a station D while the user B will return the vehicle at a station E. Therefore, the vehicle has to be transported from the station E to the station D. It takes one and a half hours to transport a vehicle from the station E to the station D. Then, the user A will be able to rent the vehicle at 17:30 after the vehicle is returned from the user B at the station D. For that reason, it is difficult for the user A to rent a vehicle at his/her desired time.

Here, for example, the user B has used the vehicle to travel to his/her destination ("the vehicle was used," hereafter). If the user B returns the vehicle at the station D by 15:00, which is the user A's desired time, and the user A rents the vehicle at 15:00, the request "wishing to rent a vehicle at 15:00" is fulfilled.

Here, provided that the user B is able to return the vehicle at the station D earlier than the user A's desired time, if the current location of the user B is closer to the station E where the user B is supposed to return the vehicle than the station D where the user A is supposed to rent a vehicle, it is unlike that the user B accepts to return the vehicle at the station D far from his/her current location for the sake of the user A. On the other hand, if the current location of the user B is closer to the station D where the user A is supposed to rent a vehicle than the station E where the user B is supposed to return the vehicle, the user B is likely to accept to return the vehicle at the far station D for the sake of the user A.

However, the user B has paid a fee Cm for the entire rental period and he/she has no incentive for returning the vehicle earlier than the return due time. Then, it is assumed that the charge by the hour from the rental start time to the user A's desired time 15:00 (of the desired rental date) (for example, a value of the hourly rate multiplied by the time from the rental start time to the vehicle return time 15:00) is Cm1. The charge by the hour for the remaining period (for example, a value of the hourly rate multiplied by the time from the return time to the rental end time) is Cm - Cm1. If the vehicle rental service provider (namely, the service provider) refunds the charge by the hour for the remaining period (Cm - Cm1) to the user B, the user B is given incentive for returning the vehicle by 15:00. Furthermore, the user A will pay an early rental fee dCm to the service provider as consideration for vehicle rental at his/her desired time 15:00 in addition to a regular rental fee Cm2. Here, the early rental fee dCm the user A will pay to the service provider is higher than the charge by the hour (Cm - Cm1) to be refunded to the user B from the service provider. Then, the service provider has incentive for asking the user B to return the vehicle by 15:00 and renting the returned vehicle to the user A at 15:00.

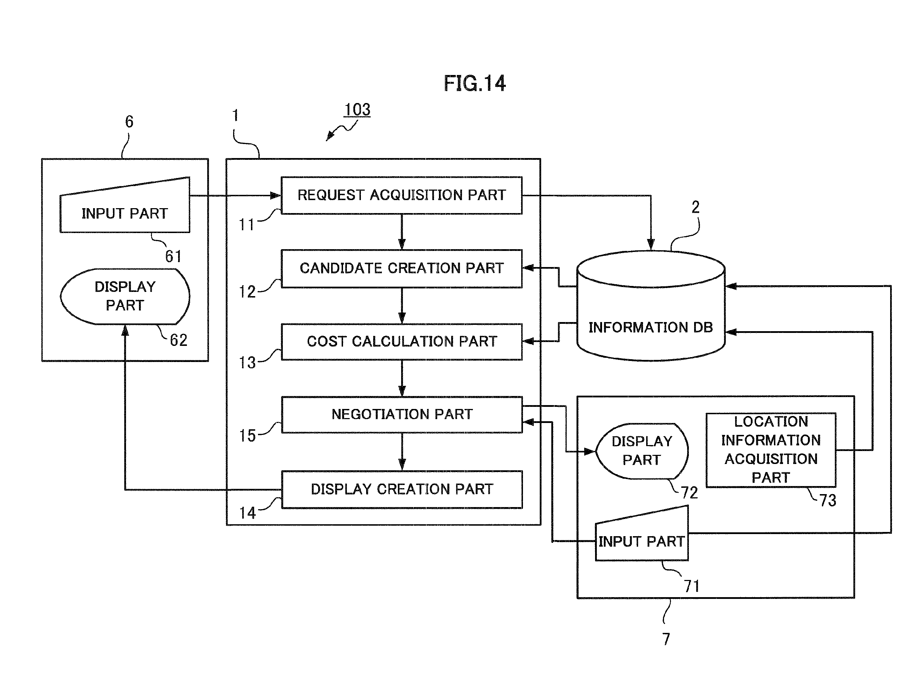

FIG. 14 is block diagram showing an exemplary configuration of the action presentation system according to Embodiment 3 of the present invention. The action presentation system 103 is composed of, as in Embodiment 2, an action presentation device 1, an information DB 2, and terminals 6 and 7. The terminal 7 will be described before the action presentation device 1, information DB 2, and terminal 6 are described.

The terminal 7 is composed of a portable terminal carried by the user, and comprises a location information acquisition part 73 in addition to the configuration described in Embodiment 2. Here, the terminal 7 can be mounted on a vehicle to be rented. The location information acquisition part 73 acquires location information presenting the detected location from a not-shown location detection part detecting the location of the terminal 7, for example, using a GPS (global positioning system). Then, the location information acquisition part 73 sends to the information DB 2 the location information of the current location of the terminal 7 and the information DB 2 stores the received location information. Here, the terminal 6 comprises an input part 61 and a display part 62 as in Embodiment 2. The terminal 6 can comprise a location information acquisition part like the terminal 7.

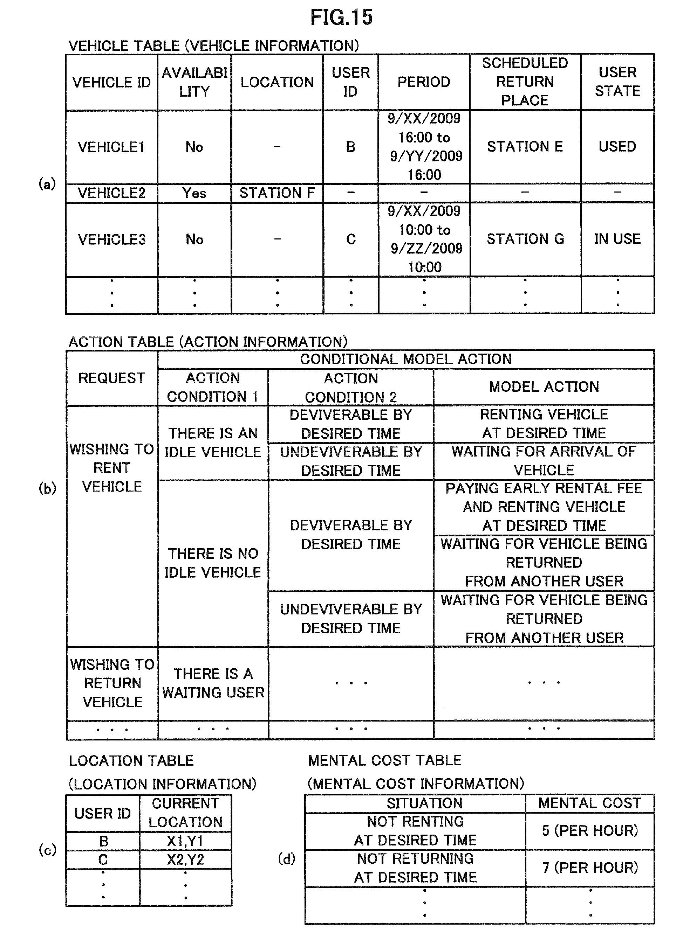

In Embodiment 3, the information DB 2 stores state information, user information, action information, and mental cost information as in Embodiment 2. The state information stored in the information. DB 2 of Modified Embodiment of Embodiment 2 further includes vehicle information presenting the states of vehicles. Information constituting the vehicle information is stored in a vehicle table having multiple records as shown in FIG. 15 (a). The information stored in the records is categorized in the fields "vehicle ID" for information identifying the vehicle, "availability" for information presenting whether the vehicle is rented out, "locations" tor information presenting a service office (station) where an unrented vehicle is present, "user" for information presenting the user renting the vehicle, "period" for information presenting the rental period, "return place" for information presenting the place where a vehicle is supposed to return, and "user state" for information presenting the current state of the user. Information in the field "user state" is entered by the user through the terminal 7 carried by him/her. The entered information is sent by the terminal 7 to the information DB 2. Here, if the terminal 7 is mounted on a rented vehicle, the information is entered by the user renting the vehicle through the terminal 7 mounted on the vehicle.

The vehicle information shown in FIG. 15 presents the following: a vehicle 1 is rented to the user B from September XX, 2009, 16:00 to September YY, 2009, 16:00; the vehicle 1 will be returned at the station E; and the user has already used the vehicle 1 and has intention to return the vehicle I (namely, returnable). The vehicle information further presents following: a vehicle 2 is not rented; and the vehicle 2 is present at the service office at a station F. The vehicle information further presents the following: a vehicle 3 is rented to the user C from September XX, 2009, 10:00 to September ZZ, 2009, 10:00; the vehicle 3 will be returned at the station G; and the user C is still using the vehicle 3. As described above, the vehicle information consists of information on each vehicle.

Here, the means for fulfilling at least part of the user request in providing vehicle rental services involves, besides vehicles, service offices such as stations where vehicles are rented and stations where vehicles are returned. Therefore, the state information further includes information presenting the states of service offices in addition to the vehicle information presenting the states of vehicles. More specifically, information presenting the states of service offices further includes vehicle transport time information associating information presenting a service office from which a vehicle is transported, information presenting a service office to which the vehicle is transported, and information presenting the vehicle transport time required for transporting a vehicle from the transport start point to the transport destination (in other words, between service offices). The state information further includes map information associating information presenting the service offices with information presenting the latitudes and altitudes of the service offices. The state information further includes fee information, consisting of information associating information presenting vehicle rental periods with information presenting the rental fees, and information presenting early rental fees.

The information DB 2 stores multiple pieces of information constituting the action information in an action table having multiple records as shown in FIG. 15 (b) as in Modified Embodiment of Embodiment 2. The information stored in the records of the action table of FIG. 15 (b) is categorized into fields "request" for information presenting the user request, and "conditional model action" for information presenting model actions the user can take when a given condition is satisfied for the request. The content of information in the field "conditional model action" may or may not be different depending on the content of information in the held "request."

Since the field "conditional model action" has multiple fields, the action information has a hierarchical field structure. More specifically, the field "conditional model action" is categorized into fields "action condition 1," "action condition 2," and "model action." The information in the field "conditional model action" associated with information in the field "request," of FIG. 15 (b) and presenting "wishing to rent a vehicle" consists of information in the field "action condition 1" presenting a condition that there is an unrented idle vehicle ("there is an idle vehicle," hereafter)," information in the field "action condition 2" presenting a condition that the idle vehicle can be delivered to the nearest station of the user by his/her desired rental time (the idle vehicle is "deliverable by the desired time," hereafter) when the condition "there is an idle vehicle" is satisfied, and information in the field "model action" presenting a model action "renting a vehicle at the desired time" the user can take for fulfilling at least part of the request when the conditions "there is an idle vehicle" and "deliverable by the desired time" are satisfied.

The above information in the field "conditional model action" further consists of information in the field "action condition 1" presenting the condition "there is an idle vehicle," information in the field "action condition 2" presenting a condition that the idle vehicle cannot be delivered to the nearest station by his/her desired rental time ("undeliverable by the desired time," hereafter) when the condition "there is an idle vehicle" is satisfied, and information in the field "model action" presenting a model action "waiting for the arrival of a vehicle" the user can take for fulfilling at least part of the request when the conditions "there is an idle vehicle" and "undeliverable by the desired time" are satisfied.

The above information in the field "conditional model action" further consists of information in the field "action condition 1" presenting a condition "there is no idle vehicle," information in the field "action condition 2" presenting a condition that there is a vehicle that is rented but will be returned to the nearest station by the desired time (in other words, a vehicle that is currently rented will be "deliverable by the desired time") when the condition "there is no idle vehicle" is satisfied, and information in the field "model action" presenting a model action "paying an early fee and renting a vehicle at the desired time from another user" the user can take for fulfilling the request when the conditions "there is no idle vehicle" and "deliverable by the desired time" are satisfied.

The above information in the field "conditional model action" further consists of information in the field "action condition 1" presenting the condition "there is no idle vehicle," information in the held "action condition 2" presenting a condition "undeliverable by the desired time" when the condition "there is no idle vehicle" is satisfied, and information in the field "model action" presenting a model action "waiting for a vehicle being returned from another user" the user can take for fulfilling at least part of the request when the conditions "there is no idle vehicle" and "undeliverable by the desired time" are satisfied.

The information DB 2 stores the location information presenting the location of the terminal 7 carried by the user in a location table having multiple records as shown in FIG. 15 (c) as the location information presenting the location of the user. The information stored in the records of the location table is categorized into fields "user ID" for information identifying the user and "current location" for information presenting the latitude and altitude of the current location of the terminal of the user that are presented by X and Y coordinates.

The information DB 2 stores multiple pieces of information constituting the mental cost information in a mental cost table having multiple records as shown in FIG. 15 (d) as in Embodiment 2. The information stored in the records of the mental cost table is categorized, as in Embodiment 2, into fields "situation" for information presenting a situation that does not match the user request and "mental cost" for information presenting a value of time cost converted from the mental cost per hour in the situation.

Here, the action presentation device 1 creates information presenting how long and where the user wishes to rent a vehicle based on the request entered by the user, and stores in the information DB 2 the created information and location information as user information presenting the state of the user. Here, the following explanation will be made on the presumption that the vehicle information, user information including location information, action information, and mental information are already stored in the information DB 2 when the user A enters the request into the terminal 6. Furthermore, the vehicle information and user information including location information are updated by the action presentation device 1 as needed each time a vehicle is rented out/returned or in a given cycle.

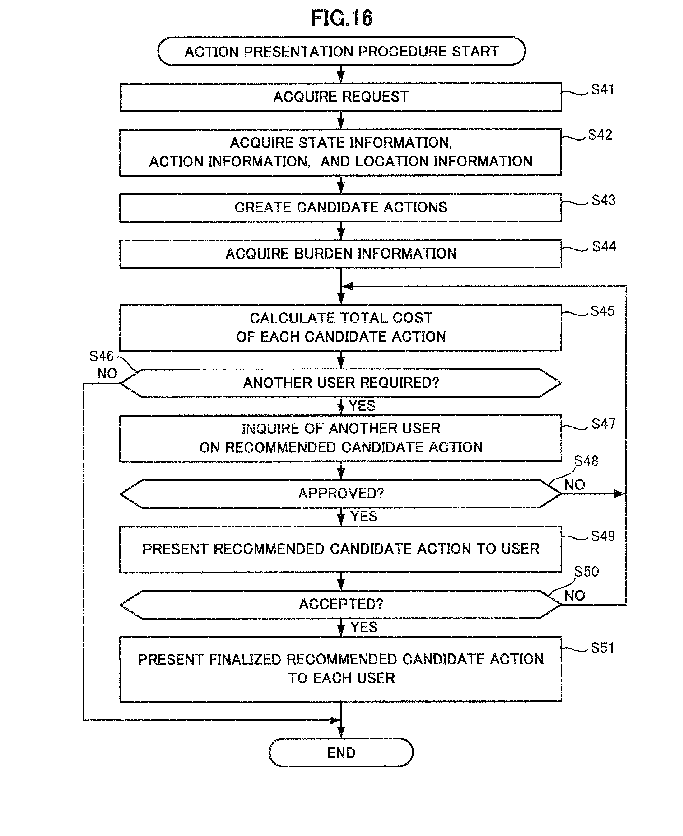

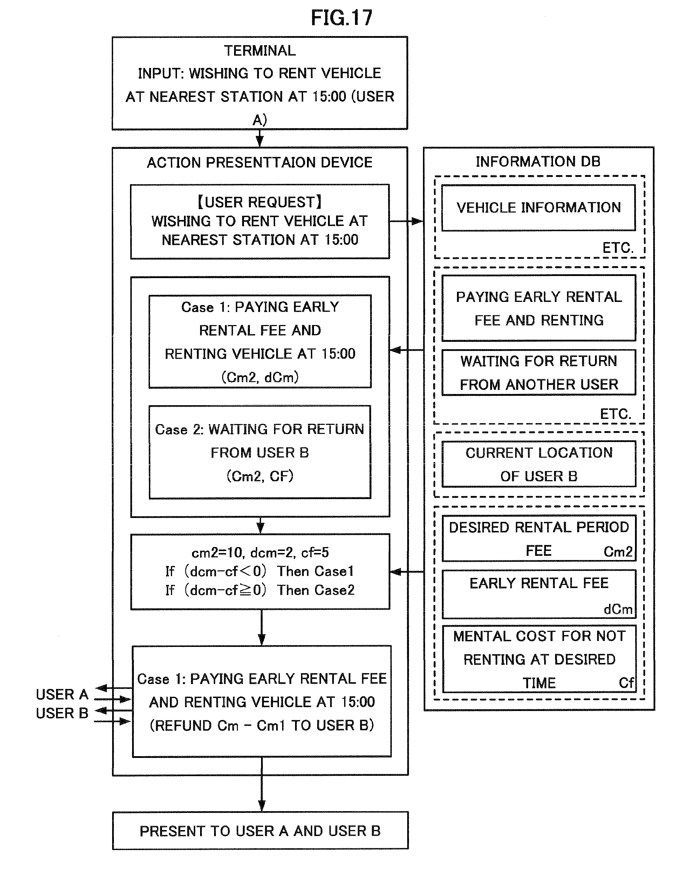

The control part 21 of the action presentation device I shown in FIG. 3 executes the action presentation procedure as shown in FIG. 16 as in Embodiment 2. As the action presentation procedure of FIG. 16 starts, the request acquisition part 11 receives from the terminal 6 information presenting a request "wishing to rent a car at the nearest station at 15:00" entered by the user A as shown in FIG. 17 (Step S 41). Then, the candidate creation part 12 acquires from the information DB 2 the state information, user information including the location information, and action information corresponding to the information presenting at least part of the request acquired by the request acquisition part 11 (Step S42), creates candidate actions the user who is at the location presented by the acquired location information can take in the state presented by the acquired state information on the presumption that another user at the location presented by the acquired location information will cooperate based on the model actions presented by the acquired action information (Step S43).

More specifically, as the user A enters the request "wishing to rent a vehicle at the nearest station at 15:00" and the station D as the nearest station, the candidate creation part 12 acquires information presenting the entered request and information presenting the nearest station being the station D. Subsequently, the candidate creation part 12 makes reference to the action information of FIG. 15 (b) and makes reference to information in the field "conditional model action" associated with information presenting the part "wishing to rent a vehicle" of the request "wishing to rent a vehicle at the nearest station at 15:00." Then, the candidate creation part 12 makes reference to information in the field "action condition 1" under the field "conditional model action" and acquires information presenting a condition "there is an idle vehicle" and information presenting a condition "there is no idle vehicle." Subsequently, the candidate creation part 12 makes reference to information in the field "availability" of FIG. 15 (a) in order to determine whether the condition presented by the acquired information is satisfied (in other words, whether there is an idle vehicle). Here, focusing only on the vehicles 1 to 3, it is determined that only the vehicle 2 is idle.

Then, the candidate creation part 12 makes reference to information in the field "action condition 1" under the field "conditional model action" in the action information of FIG. 15 (b), acquires information presenting a condition "deliverable by the desired time" and a condition "undeliverable by the desired time." Then, the candidate creation part 12 makes reference to information presenting the location of the vehicle 2 in the field "location" associated with information presenting the vehicle 2 in the action information, of FIG. 15 (b) in order to determine whether the condition presented by the acquired information is satisfied (in other words, a vehicle is deliverable or undeliverable by the desired time). Subsequently, the candidate creation part 12 searches the vehicle transport time information contained in the state information for information presenting the vehicle transport time from the station F where the vehicle 2 is located as presented by the referred information to the station D that is the nearest station of the user A. Subsequently, the candidate creation part 12 adds the vehicle transport time presented by the found information to the current time to obtain the time when the transport of the vehicle 2 to the station D is completed. Subsequently, the candidate creation part 12 determines whether the calculated completion time is before the desired rental time of the user A (in other words, whether an idle vehicle is deliverable by the desired time).

If the idle vehicle 2 cannot be delivered to the station D by the user A's desired time (an idle vehicle is undeliverable by the desired time), the candidate creation part 12 acquires from the action information of FIG. 15 (b) information in the field "model action" associated with information presenting the condition "there is an idle vehicle" and information presenting "undeliverable by the desired time." Subsequently, the candidate creation part 12 creates a candidate action Case 0 "waiting for the arrival of a vehicle" based on the model action presented by the acquired information.

On the other hand, if an idle vehicle is undeliverable by the desired time, the candidate creation part 12 determines that the condition "there is no idle vehicle" is satisfied. This is because there is no idle vehicle deliverable by the desired time. Then, the candidate creation part 12 determines whether any rented vehicle is deliverable by the desired rental time. More specifically, the candidate creation part 12 makes reference to information in the field "user ID" and information in the field "user state" in the vehicle information of FIG. 15 (a), and determines that the vehicle 1 was used by the user "B." Then, the candidate creation part 12 searches the location information of FIG. 15 (c) for information in the field "location" associated with information identifying the user B. The candidate creation part 12 further searches the map information stored in the information DB 2 for information presenting the latitude and altitude of the station D associated with information presenting the station D (namely, a service office) that is the nearest station of the user A. Subsequently, the candidate creation part 12 calculates the necessary time from the current location of the vehicle 1 to the station D using the method described in Embodiment 1 based on information presenting the latitude and altitude of the found location of the user B (namely, the location of the vehicle 1 the user B is driving) and information presenting the latitude and altitude of the station D that is the nearest station of the user A. Subsequently, the candidate creation part 12 adds the calculated necessary time to the current time to predict the return time of the vehicle 1 at the station D. Then, the candidate creation part 12 determines whether the vehicle 1 will be returned at the station D before the user A's desired time. Here, the user B is supposed to return the vehicle at the station E. However, if the user B travels to the station D in the vehicle 1 from now and returns the vehicle 1 at the station D instead of the station E, the vehicle 1 will be returned before the user A's desired time, whereby the candidate creation part 12 determines that the user A can rent the vehicle I at 15:00 (namely, deliverable by the desired time).

In this way, the candidate creation part 12 acquires two pieces of information in the field "model action" associated with information presenting the condition "there is no idle vehicle" and information presenting "deliverable by the desired time." Subsequently, the candidate creation part 12 creates candidate actions Case 1 "paying an early rental fee and renting a vehicle from the user B at 15:00" and Case 2 "waiting for the vehicle being returned from the user B" as shown in FIG. 17 based on the model actions presented by the acquired two pieces of information.

Here, the distance between the station F where an idle vehicle is located and the station D that is the nearest station of the user A is significantly larger than the distance between the station E at which the user B will return the vehicle and the station D. Then, the time resulting from adding the vehicle transport time from the station E to the station D to the user B's vehicle return time (in other words, the time when the user B will possibly return the vehicle at the station D) is before the time resulting from adding the vehicle transport time from the station F to the station D to the current time (in other words, the time when an idle vehicle at the station F will possibly be delivered to the station D). Therefore, the candidate creation part 12 deletes the created Case 0 "waiting for the arrival of a vehicle (an idle vehicle)" and sends information presenting Case 1 "paying an early rental fee and renting a vehicle from the user B at 15:00" and information presenting Case 2 "waiting for the vehicle being returned from the user B" to the cost calculation part 13.

After the Step S43 of FIG. 16, the cost calculation part 13 acquires information necessary for calculating the cost of each of the candidate actions created by the candidate creation part 12 as in Embodiment 2, and calculates the cost the user will bear when he/she executes each of the candidate actions using the acquired information (Step S44).

More specifically, the cost calculation part 13 makes reference to fee information contained in the state information and acquires information presenting a rental fee Cm2 and information presenting an early rental fee dCm the user A will bear when the user A executes the candidate action Case 1 "paying an early rental fee and renting a vehicle at the desired time." Furthermore, the cost calculation part 13 similarly acquires information presenting a rental fee Cm2 the user A will bear when the user A executes the candidate action Case 2 "waiting for the vehicle being returned from the user B" from the fee information. Then, the cost calculation part 13 makes reference to information in the field "mental cost" associated with information presenting the situation "not renting at the desired time" in the mental cost information shown in FIG. 15 (d).

Then, the cost calculation part 13 assumes that the probable time at which the user B will return the vehicle is at the end of his/her rental period in the event that the user A selects Case 2 "waiting for the vehicle being returned from the user B." Subsequently, the cost calculation part 13 searches the vehicle transport time information contained in the state information for information presenting the vehicle transport time from the station E at which the user B is supposed to return the vehicle to the station D that is the nearest station of the user A. Subsequently, the cost calculation part 13 adds the vehicle transport time presented by the found information to the probable return time to predict the time when the user A can rent a vehicle. Then, the cost calculation part 13 calculates the wait time from the user A's desired rental time to the predicted rental time. Subsequently, the cost calculation part 13 multiplies a value Cf of the mental cost per hour presented by the referred information by the calculated wait time to obtain the mental cost CF the user A will bear when the user A executes the candidate action Case 2.

Subsequently, the cost calculation part 13 multiplies the acquired monetary cost Cm2 and dCm and calculated mental cost CF by their respective given conversion coefficients for equivalent conversion so as to obtain values "cm2 = 10," "dcm = 2," and "cf = 5." Then, if dcm - cf < 0, the cost calculation part 13 determines that Case 1 has the lowest total cost among the candidate actions created by the candidate creation part 12. On the other hand, if dcm - cf ≥ 0, the cost calculation part 13 determines that Case 2 has the lowest total cost. Here, since cm2 = 10, dcm = 2, and cf = 5, the cost calculation part 13 sends information presenting Case 1 "paying an early rental fee and renting a vehicle from the user B at 15:00" to the negotiation part 15 as the recommended candidate action.

After the Step S44 of FIG. 16, the action presentation device 1 executes the same processing (Step S45 to Step S51) as that from the Step S25 to Step S31 described in Embodiment 2, and then ends the action presentation procedure.

Here, in the above explanation, with reference to FIG. 16, the user A enters a request "wishing to rent a vehicle at the nearest station at 15:00" into the input part 61 of the terminal 6 and enters the station D as the nearest station of the user A. However, this is not restrictive. It is possible that not only the terminal 7 but also the terminal 6 is provided with a location information acquisition part, and the candidate creation part 12 acquires location information presenting the current location of the terminal 6 from the location information acquisition part and automatically identifies the nearest station of the user A based on the acquired information and information presenting the locations of stations stored in advance. Furthermore, in this embodiment, the location information acquisition part 73 sends location information presenting the current location of the terminal 7 to the information DB 2. This is not restrictive. The location information acquisition part 73 may send to the information DB2 and action presentation device 1 not only the current location of the user B carrying the terminal 7 but also information presenting the location several hours or several days after the user input, or information presenting the location several hours or several days later that is predicted based on data of the scheduled travel route determined by route search of a navigation system mounted on the terminal 7.

In this embodiment, the action presentation system 102 constitutes a system providing vehicle rental services for profit and, for example, recommends to the user an action fulfilling at least part of the user request relating to vehicle rental services such as "wishing to return a vehicle at 15:00 today." However, this is not restrictive. The action presentation system 101 can constitute a system providing (namely, selling) tires, or goods, for profit and, for example, recommend to the user an action "purchasing tires from the user B today" as an action fulfilling the request of the user A relating to the tire sales such as "wishing to purchase tires at 15:00 today."

As described above, the action presentation system 103 of Embodiment 3 recommends to the user an action having the lowest total cost in consideration of the user's mental cost and the states of other users. Therefore, an action the user is likely to take is presented. Particularly, an action having the lowest total cost calculated in consideration of the user location information is presented. Then, when the action presentation system 101 constitutes, for example, a rental system renting mobile bodies such as vehicles or a sharing system offering mobile bodies shared by multiple users, the rental system or sharing system can be operated smoothly.

Furthermore, with the above configuration, an action having a prerequisite action another user is executable at the location of his/her terminal is employed as the candidate action. Therefore, a candidate action for which another user is likely to cooperate can be created.

The above embodiments are partially or entirely described as in the following subjunction, but not limited thereto.

(Subjunction 1) An action presentation system, comprising an information storage means associating and storing information presenting at least part of a request regarding provision of goods or services, state information that is information presenting the state of a means for fulfilling at least part of the request, and action information that is information presenting model actions for fulfilling at least part of the request; a request acquisition means acquiring request information presenting a request of a first user; a state/action information acquisition means acquiring state information and action information associated with information presenting at least part of the request presented by the acquired request information from the information storage means; a candidate creation means creating multiple candidate actions that are candidates for actions the first user can execute for fulfilling at least part of the request of the first user in the state presented by the acquired state information based on the model actions presented by the acquired action information; a cost calculation means calculating the total cost of each of the created candidate actions including mental cost presenting the magnitude of mental strain the first user will experience from execution of the candidate action; and a first presentation means presenting to the user a candidate action selected from the multiple created candidate actions based on the calculated total cost as the recommended candidate action for the first user to execute.

(Subjunction 2) The action presentation system according to Subjunction 1, wherein the cost calculation means converts the mental cost to physical cost or monetary cost, and adds the converted mental cost to the physical cost or monetary cost the first user will bear when he/she executes the candidate action so as to obtain the total cost of the candidate action.

(Subjunction 3) The action presentation system according to Subjunction 1 or 2, wherein the first presentation means presents to the user the candidate action having the lowest calculated total cost among multiple candidate actions created by the candidate creation means as the recommended candidate action for the first user to execute.

(Subjunction 4) The action presentation system according to any one of Subjunction 1 to 3, further comprising a negotiation means sending to a terminal used by a second user who is expected to execute a prerequisite action for the first user to execute the recommended candidate action information presenting an inquiry whether he/she will approve or disapprove the user executing the recommended candidate action, and receiving from the terminal of the second user information presenting approval or disapproval response to the inquiry, wherein the first presentation means presents the recommended candidate action to the first user when the response presented by the information received by the negotiation means is approval.

(Subjunction 5) The action presentation system according to Subjunction 4, further comprising a first location information acquisition means acquiring first location information that is information presenting the location of the terminal used by the first user, wherein the candidate creation means creates multiple candidate actions the first user can execute at the location presented by the acquired first location information in the state presented by the acquired state information based on the model actions presented by the acquired action information.

(Subjunction 6) The action presentation system according to Subjunction 5, further comprising a second location information acquisition means acquiring second location information that is information presenting the location of the terminal used by the second user, wherein the candidate creation means creates multiple candidate actions accompanied by prerequisite actions the second user can execute at the location presented by the acquired second location information in the state presented by the acquired state information based on the model actions presented by the acquired action information.

(Subjunction 7) The action presentation system according to any one of Subjunction 4 to 6, wherein the negotiation means sends information presenting benefit the second user will receive from execution of the prerequisite action for the recommended candidate action along with information presenting an inquiry whether the second user will approve or disapprove the first user executing the recommended candidate action; and a second presentation means presenting to the second user the benefit presented by the sent information along with the inquiry presented by the sent information is further provided.

(Subjunction 8) An action presentation device, comprising a request acquisition means acquiring request information that is information presenting a request regarding provision of goods or services; a state/action information acquisition means acquiring state information that is information presenting the state of a means for fulfilling at least part of the request presented by the acquired request information, and action information that is information presenting model actions for fulfilling at least part of the request from an information storage means; a candidate creation means creating multiple candidate actions that are candidates for actions the first user can execute for fulfilling at least part of the request of the first user in the state presented by the acquired state information based on the model actions presented by the acquired action information; a cost calculation means calculating the total cost of each of the created candidate actions including mental cost presenting the magnitude of mental strain the first user will experience from execution of the candidate action; and a first presentation means presenting to the first user a candidate action selected from the multiple created candidate actions based on the calculated total cost as the recommended candidate action for the first user to execute.

(Subjunction 9) An action presentation program recorded on a computer-readable recording medium, allowing a computer to function as a request acquisition means acquiring request information that is information presenting a request regarding provision of goods or services; a state/action information acquisition means acquiring state information that is information presenting the state of a means for fulfilling at least part of the request presented by the acquired request information, and action information that is information presenting model actions for fulfilling at least part of the request from an information storage means; a candidate creation means creating multiple candidate actions that are candidates for actions the first user can execute for fulfilling at least part of the request of the first user in the state presented by the acquired state information based on the model actions presented by the acquired action information; a cost calculation means calculating the total cost of each of the created candidate actions including mental cost presenting the magnitude of mental strain the first user will experience from execution of the candidate action; and a first presentation means presenting to the first user a candidate action selected from the multiple created candidate actions based on the calculated total cost as the recommended candidate action for the first user to execute.

(Subjunction 10) An action presentation method, comprising a request acquisition step of acquiring request information that is information presenting a request regarding provision of goods or services; a state/action information acquisition step of acquiring state information, that is information presenting the state of a means for fulfilling at least part of the request presented by the acquired request information, and action information that is information presenting model actions for fulfilling at least part of the request from an information storage mean; a candidate creation step of creating multiple candidate actions that are candidates for actions the first user can execute for fulfilling at least part of the request of the first user in the state presented by the acquired state information based on the model actions presented by the acquired action information; a cost calculation step of calculating the total cost of each of the created candidate actions including mental cost presenting the magnitude of mental strain the first user will experience from execution of the candidate action; and a first presentation step of presenting to the first user a candidate action selected from the multiple created candidate actions based on the calculated total cost as the recommended candidate action for the first user to execute.

(Subjunction 11) An action presentation device, comprising a request acquisition means acquiring a request regarding provision of goods or services from a user; a state/action information acquisition means acquiring state information that is information regarding a means for fulfilling the request of the user, and action information that is information presenting actions the user can take for fulfilling the request of the user; a candidate creation means creating candidate actions presenting actions the user can execute for fulfilling the request of the user based on the state information and action information; a burden information acquisition means acquiring burden information corresponding to the candidate actions and presenting burden from the viewpoint of each of the candidate actions including mental cost that is a value presenting the magnitude of mental strain the user will experience and exchangeable into another burden; a cost calculation means calculating the total cost of each of the candidate actions acquired by the candidate acquisition means based on the burden information acquired by the burden information acquisition means and calculating a recommended candidate action of which the total cost is lowest; and a presentation means presenting to the user the recommended candidate action calculated by the cost calculation means.

(Subjunction 12) The action presentation device according to Subjunction 11, comprising a negotiation means sending to another user who is expected to execute a prerequisite action for the recommended candidate action an inquiry whether he/she will approve or disapprove execution of the recommended candidate action, and receiving from the other user approval or disapproval response to the inquiry, wherein the presentation means presents the recommended candidate action to the user when the response received by the negotiation means is approval.

(Subjunction 13) The action presentation device according to Subjunction 12, comprising a location information acquisition means acquiring location information that is information presenting the locations of the user and the other user, wherein the candidate creation means creates the candidate actions based on the state information and action information and the location information acquired by the location information acquisition means.

(Subjunction 14) The action presentation device according to Subjunction 12 or 13, wherein the presentation means presents to the other user information presenting benefit from execution of the recommended candidate action simultaneously when the negotiation means sends an inquiry whether the other user will approve or disapprove the recommended candidate action.

(Subjunction 15) An action presentation method, comprising a request acquisition step of acquiring a request regarding provision of goods or services from a user; a state/action information acquisition step of acquiring state information that is information regarding a means for fulfilling the request of the user, and action information that is information presenting actions the user can take for fulfilling the request of the user; a candidate creation step of creating candidate actions presenting actions the user can execute for fulfilling the request of the user based on the state information and action information; a burden information acquisition step of acquiring burden information corresponding to the candidate actions and presenting burden from the viewpoint of each of the candidate actions including mental cost that is a value presenting the magnitude of mental strain the user will experience and exchangeable into another burden; a cost calculation step of calculating the total cost of each of the candidate actions acquired in the candidate acquisition step based on the burden information acquired in the burden information acquisition step and calculating a recommended candidate action of which the total cost is lowest; and a presentation step of presenting to the user the recommended candidate action calculated in the cost calculation step.

(Subjunction 16) The action presentation method according to Subjunction 15, comprising a negotiation step of sending to another user who is expected to execute a prerequisite action for the recommended candidate action an inquiry whether he/she will approve or disapprove execution of the recommended candidate action, and receiving from the other user approval or disapproval response to the inquiry, wherein in the presentation step, the recommended candidate action is presented to the user when the response received in the negotiation step is approval.

(Subjunction 17) The action presentation method according to Subjunction 16, comprising a location information acquisition step of acquiring location information that is information presenting the locations of the user and the other user, wherein in the candidate creation step, the candidate actions are created based on the state information and action information and the location information acquired in the location information acquisition step.

(Subjunction 18) The action presentation method according to Subjunction 17, wherein in the presentation step, information presenting benefit from execution of the recommended candidate action is presented to the other user simultaneously when an inquiry whether the other user will approve or disapprove the recommended candidate action is sent in the negotiation step.

(Subjunction 19) An action presentation program, allowing a computer to execute a request acquisition step of acquiring a request regarding provision of goods or services from a user; a state/action information acquisition step of acquiring state information that is information regarding a means for fulfilling the request of the user, and action information that is information presenting actions the user can take for fulfilling the request of the user; a candidate creation step of creating candidate actions presenting actions the user can execute for fulfilling the request of the user based on the state information and action information; a burden information acquisition step of acquiring burden information corresponding to the candidate actions and presenting burden from the viewpoint of each of the candidate actions including mental cost that is a value presenting the magnitude of mental strain the user will experience and exchangeable into another burden; a cost calculation step of calculating the total cost of each of the candidate actions acquired in the candidate acquisition step based on the burden information acquired in the burden information acquisition step and calculating a recommended candidate action of which the total cost is lowest; and a presentation step of presenting to the user the recommended candidate action calculated in the cost calculation step.

In addition, the above-described hardware configurations and flowcharts are given by way of example and any changes and modifications can be made. Furthermore, Embodiment 1, Embodiment 2, Modified Embodiment of Embodiment 2, and Embodiment 3 can be combined with each other.

The core part consisting of the request acquisition part 11, candidate creation part 12, cost calculation part 13, display creation part 14, and the like for executing the action presentation procedure can be realized by a convention computer system instead of a dedicated system. For example, computer programs executing the above-described operations can be stored and distributed on a computer-readable storage medium (flexible disc, CD-ROM, DVD-ROM, etc.) and installed on a computer to configure the action presentation system 101, 102, or 103 executing the above-described procedure. Alternatively, the computer programs can be stored in a storage device of a server unit on a communication network such as the Internet and downloaded on a conventional computer system to configure the action presentation system 101, 102, or 103.

Furthermore, when the functions of the action presentation system 101, 102, or 103 are realized by apportionment between an OS (operation system) and application programs or cooperation of an OS and application programs, only the application programs can be stored in a storage medium or storage device.

Furthermore, the computer programs can be superimposed on carrier waves to distribute them via a communication network. For example, the computer programs can be posted on a bulletin board system (BBS) of a communication network to distribute them via the network. Then, the computer programs can be activated and executed in a manner similar to other application programs under the control of an OS so that the above-described procedures are executed.

Various embodiments and modifications are available to the present invention without departing from the broad sense of spirit and scope of the present invention. The above-described embodiments are given for explaining the present invention and do not confine the scope of the present invention. In other words, the scope of the present invention is set forth by the scope of claims, not by the embodiments. Various modifications made within the scope of claims and scope of significance of the invention equivalent thereto are considered to fall under the scope of the present invention.

This application is based on Japanese Patent Application No. 2009-289792 filed on December 21, 2009, and including specification, claims, drawings and summary. The disclosure of the above Japanese Patent Application is incorporated herein by reference in its entirety.

### Legend

- 1: Action presentation device
- 2: Information database
- 6: Terminal
- 7: Terminal
- 11: Request acquisition part
- 12: Candidate creation part
- 13: Cost calculation part
- 14: Display creation part
- 15: Negotiation part
- 21: Control part
- 22: Main storage
- 23: External storage
- 24: Operation part
- 25: Display part
- 26: Input/output part
- 27: Transmission/reception part
- 28: Information collection device
- 30: Control programs
- 61: Input part
- 62: Display part
- 71: Input part
- 72: Display part
- 73: Location information acquisition part
- 101, 102, 103: Action presentation system

## Claims

1. An action presentation system, comprising:
an information storage means associating and storing information presenting at least part of a request regarding provision of goods or services, state information that is information presenting the state of a means for fulfilling at least part of said request, and action information that is information presenting model actions for fulfilling at least part of said request;
a request acquisition means acquiring request information presenting a request of a first user;
a state/action information acquisition means acquiring state information and action information associated with information presenting at least part of the request presented by said acquired request information from said information storage means;
a candidate creation means creating multiple candidate actions that are candidates for actions said first user can execute for fulfilling at least part of the request of said first user in the state presented by said acquired state information based on the model actions presented by said acquired action information;
a cost calculation means calculating the total cost of each of said created candidate actions including mental cost presenting the magnitude of mental strain said first user will experience from execution of the candidate action; and
a first presentation means presenting to said user a candidate action selected from said multiple created candidate actions based on said calculated total cost as the recommended candidate action for said first user to execute.

2. The action presentation system according to Claim 1, wherein:
said cost calculation means converts said mental cost to physical cost or monetary cost, and adds said converted mental cost to the physical cost or monetary cost said first user will bear when he/she executes said candidate action so as to obtain the total cost of the candidate action.

3. The action presentation system according to Claim 1 or 2, wherein:
said first presentation means presents to said user the candidate action having the lowest calculated total cost among multiple candidate actions created by said candidate creation means as the recommended candidate action for said first user to execute.

4. The action presentation system according to any one of Claims 1 to 3, further comprising:
a negotiation means sending to a terminal used by a second user who is expected to execute a prerequisite action for said first user to execute said recommended candidate action information presenting an inquiry whether he/she will approve or disapprove said user executing said recommended candidate action, and receiving from the terminal of said second user information presenting approval or disapproval response to the inquiry,
wherein said first presentation means presents said recommended candidate action to said first user when the response presented by the information received by said negotiation means is approval.

5. The action presentation system according to Claim 4, further comprising:
a first location information acquisition means acquiring first location information that is information presenting the location of the terminal used by said first user,
wherein said candidate creation means creates multiple candidate actions said first user can execute at the location presented by said acquired first location information in the state presented by said acquired state information based on the model actions presented by said acquired action information.

6. The action presentation system according to Claim 5, further comprising:
a second location information acquisition means acquiring second location information that is information presenting the location of the terminal used by said second user,
wherein said candidate creation means creates multiple candidate actions accompanied by prerequisite actions said second user can execute at the location presented by said acquired second location information in the state presented by said acquired state information based on the model actions presented by said acquired action information.

7. The action presentation system according to any one of Claims 4 to 6, wherein:
said negotiation means sends information presenting benefit said second user will receive from execution of the prerequisite action for said recommended candidate action along with information presenting an inquiry whether said second user will approve or disapprove said first user executing said recommended candidate action; and
a second presentation means presenting to said second user the benefit presented by said sent information along with the inquiry presented by said sent information is further provided.

8. An action presentation device, comprising:
a request acquisition means acquiring request information that is information presenting a request regarding provision of goods or services;
a state/action information acquisition means acquiring state information that is information presenting the state of a means for fulfilling at least part of the request presented by said acquired request information, and action information that is information presenting model actions for fulfilling at least part of said request from an information storage means;
a candidate creation means creating multiple candidate actions that are candidates for actions said first user can execute for fulfilling at least part of the request of said first user in the state presented by said acquired state information based on the model actions presented by said acquired action information;
a cost calculation means calculating the total cost of each of said created candidate actions including mental cost presenting the magnitude of mental strain said first user will experience from execution of the candidate action; and
a first presentation means presenting to said first user a candidate action selected from said multiple created candidate actions based on said calculated total cost as the recommended candidate action for said first user to execute.

9. A computer-readable recording medium having an action presentation program recorded thereon, wherein said program allows a computer to function as:
a request acquisition means acquiring request information that is information presenting a request regarding provision of goods or services;
a state/action information acquisition means acquiring state information that is information presenting the state of a means for fulfilling at least part of the request presented by said acquired request information, and action information that is information presenting model actions for fulfilling at least part of said request from an information storage means;
a candidate creation means creating multiple candidate actions that are candidates for actions said first user can execute for fulfilling at least part of the request of said first user in the state presented by said acquired state information based on the model actions presented by said acquired action information;
a cost calculation means calculating the total cost of each of said created candidate actions including mental cost presenting the magnitude of mental strain said first user will experience from execution of the candidate action; and
a first presentation means presenting to said first user a candidate action selected from said multiple created candidate actions based on said calculated total cost as the recommended candidate action for said first user to execute.

10. An action presentation method, comprising:
a request acquisition step of acquiring request information that is information presenting a request regarding provision of goods or services;
a state/action information acquisition step of acquiring state information that is information presenting the state of a means for fulfilling at least part of the request presented by said acquired request information, and action information that is information presenting model actions for fulfilling at least part of said request from an information storage mean;
a candidate creation step of creating multiple candidate actions that are candidates for actions said first user can execute for fulfilling at least part of the request of said first user in the state presented by said acquired state information based on the model actions presented by said acquired action information;
a cost calculation step of calculating the total cost of each of said created candidate actions including mental cost presenting the magnitude of mental strain said first user will experience from execution of the candidate action; and
a first presentation step of presenting to said first user a candidate action selected from said multiple created candidate actions based on said calculated total cost as the recommended candidate action for said first user to execute.
